# EUROPEAN PATENT APPLICATION

(11) **EP 2 657 277 A1**
(43) Date of publication of application: **30.10.2013**
(21) Application number: 13164660.6
(22) Date of filing: 22.04.2013
(51) Int. Cl.: C08J 7/06, B32B 27/36, C08K 5/101, C09J 7/02, G02B 1/10

(54) **Surface protection film**

(30) Priority: 23.04.2012 JP 2012097971; 10.01.2013 JP 2013002196
(71) Applicant: NITTO DENKO CORPORATION, Ibaraki-shi, Osaka 567-8680 (JP)
(72) Inventor: Niimi, Kenjiro, Ibaraki-shi, Osaka 567-8680 (JP); Ukei, Natsuki, Ibaraki-shi, Osaka 567-8680 (JP); Haruta, Hiromoto, Ibaraki-shi, Osaka 567-8680 (JP); Kataoka, Kenichi, Ibaraki-shi, Osaka 567-8680 (JP); Mitsui, Kazuma, Ibaraki-shi, Osaka 567-8680 (JP); Morimoto, Yu, Ibaraki-shi, Osaka 567-8680 (JP); Amano, Tatsumi, Ibaraki-shi, Osaka 567-8680 (JP)
(74) Representative: Grünecker, Kinkeldey, Stockmair & Schwanhäusser

(57) **Abstract**

The invention provides a surface protection film 1 comprising a top coat layer 14 on a first face 12A of a substrate 12, and a pressure-sensitive adhesive layer 20 on a second face 12B. The top coat layer 14 comprises a wax as a slip agent, and a polyester resin as a binder. Here, the wax is an ester of a higher fatty acid and a higher alcohol.

## Description

### CROSS-REFERENCE

The present application claims priority based on Japanese Patent Application No. 2012-97971 filed on April 23rd, 2012 and No. 2013-002196 filed on January 10th, 2013, and the entire contents of these applications are incorporated herein by reference.

### BACKGROUND OF THE INVENTION

### 1. Field of the Invention

The present invention relates to a surface protection film to be adhered to an adherend (object to be protected) for protection of its surface.

### 2. Description of the Related Art

Surface protection film (surface protection sheet) is generally constructed to comprise a pressure-sensitive adhesive (PSA) provided on a backing film (substrate). Adhered to an adherend via the PSA, such surface protection film is used for protecting the adherend from scratches and dirt during the processing procedures, transport, and so on. For instance, in manufacturing of a liquid crystal display panel, a polarizing plate to be adhered on a liquid crystal cell is first produced as a roll, and then when used, it is unreeled to be cut into desirable dimensions corresponding to the liquid crystal cell shape. Here, as a measure taken to prevent the polarizing plate from scratches, which can be caused by friction with conveying rollers during intermediate processing procedures, a surface protection film is adhered to one or each (typically one) face of the polarizing plate. Technical literature relating to a surface protection film includes Japanese Patent Application Publication Nos. 2009-107329 and 2011-20348. Japanese Patent Application Publication No. H09-324172 is cited as a technical document that relates to a release agent applied to a surface of a protection sheet, with the surface providing protection to a PSA layer of a PSA tape or the like, and the protection sheet being to be removed when the PSA tape is used.

### SUMMARY OF THE INVENTION

From the standpoint of allowing one to perform visual inspection of an adherend (e.g., a polarizing plate) with a surface protection film being adhered thereon, a transparent kind is preferably used as such a surface protection film. In recent years, with a higher level of visual quality being required of a surface protection film in view of the facilitation, accuracy, etc., of the visual inspection, for example, abrasion resistance is desired in the back face (which is opposite to the face to be adhered to an adherend) of a surface protection film. When an abrasion is present in the surface protection film, one cannot determine whether the abrasion is present on its adherend or on the surface protection film, with the surface protection film being adhered thereon.

As a means to make the back face of a surface protection film less susceptible to abrasions, a hard surface layer (top coat layer) can be provided to the back face. Such a top coat layer can be formed typically by applying a coating mixture to a substrate's back face and allowing it to dry and cure. In view of attaining higher abrasion resistance (scratch resistance), it is advantageous that the top coat layer has slipperiness to a suitable degree. With the slipperiness, the top coat layer can dissipate a frictional stress that may be applied thereto over its surface. As an additive (slip agent) for providing slipperiness to the top coat layer, in general, a silicone-based slip agent (e.g., a silicone compound such as a polyether-modified polydimethylsiloxane, etc.), a fluorine-based slip agent, or the like is used.

The present inventors, however, found out that a substrate having a top coat layer containing a silicone-based slip agent is susceptible to clouding (whitening) of its external appearance under a certain storage condition (e.g., when stored under a hot-humid condition). When the substrate in a surface protection film turns cloudy, the adherend surface becomes less visible through the surface protection film. As a consequence, when carrying out visual inspection of the adherend with the surface protection film adhered thereon, the accuracy of the inspection will decrease.

One objective of the present invention is thus to provide a surface protection film comprising a top coat layer that contains a slip agent, yet is less susceptible to clouding.

The surface protection film disclosed herein comprises a substrate having a first face and a second face, and a top coat layer provided on the first face (back face) of the substrate. The surface protection film typically comprises a PSA layer provided on the second face (front face) of the substrate. The top coat layer comprises a wax as a slip agent (a component that provides slipperiness) and a polyester resin as a binder. Here, the wax is an ester of a higher fatty acid and a higher alcohol.

As such, according to a top coat layer comprising a prescribed wax (i.e., an ester of a higher fatty acid and a higher alcohol) as a slip agent and a polyester resin as its binder, clouding of the top coat layer can be effectively suppressed even under a hot-humid condition. A substrate having such a top coat layer on the back face may exhibit excellent scratch resistance because of the slip agent contained, and even excellent clouding resistance as well. Thus, a surface protection film comprising the substrate may have greater visual quality.

In a typical embodiment of the surface protection film disclosed herein, the substrate is a resin film. For instance, can be preferably used a resin film (polyester resin film) formed of a resin material comprising a polyester as its primary component (a component contained at greater than 50 % by mass). In a surface protection film comprising such a substrate, the back face of the substrate and the top coat layer may be adhered tightly. This is advantageous in view of increasing the scratch resistance of the surface protection film.

The surface protection film disclosed herein can be made preferably in an embodiment where the top coat layer comprises an antistatic ingredient. In such a surface protection film, by means of the top coat layer, both scratch resistance and antistatic properties can be provided to the surface protection film. Thus, unlike an embodiment where a separate layer (an antistatic layer) is provided to prevent static build-up (such as an embodiment where an antistatic layer is placed between the substrate's back face and the top coat layer), without increasing the number of layers that constitute the surface protection film, the surface protection film can be provided with antistatic properties, or its antistatic properties can be increased. This is advantageous from the standpoint of increasing the ability of the surface protection film to make the adherend surface visible for visual inspection through itself. It is also preferable from the standpoint of the production efficiency of the surface protection film.

Preferable examples of the PSA constituting the PSA layer include acrylic PSAs. Since acrylic PSA is highly transparent in general, according to the film constitution described above, can be obtained a surface protection film that provides greater visibility of the adherend surface through itsetf.

The surface protection film disclosed herein can be made preferably in an embodiment where the PSA layer comprises an antistatic ingredient. According to such an embodiment, antistatic properties can be provided to the surface protection film by means of the PSA layer. Thus, without increasing the number of layers that constitute the surface protection film, the surface protection film can be provided with antistatic properties, or its antistatic properties can be increased.

The surface protection film disclosed herein is preferable as a surface protection film (surface protection film for optical components) to be adhered to optical components (e.g., those used as components of liquid crystal display panels, such as polarizing plates, wave plates, etc.) and protect their surfaces during their manufacturing and transport.

### BRIEF DESCRIPTION OF THE DRAWINGS

Fig. 1 shows a cross-sectional view illustrating an application of a surface protection film according to an embodiment.
Fig. 2 shows a cross-sectional view illustrating the pre-use state of a surface protection film according to an embodiment.
Fig. 3 shows a cross-sectional view illustrating a method for removing a surface protection film according to an embodiment.
Fig. 4 shows a diagram illustrating a method for measuring the back-face peel strength.

### DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skills in the art. The present invention can be practiced based on the contents disclosed in this description and common technical knowledge in the subject field.
In the drawings referred to below, all members and sites providing the same effect are indicated by a common reference numeral, and redundant descriptions may be omitted or simplified. The embodiments shown in the figures are schematically drawn in order to clearly illustrate the present invention and are not of accurate representations of dimensions and scales of the surface protection film to be provided as an actual product of this invention.

In the present description, "slip agent" refers to a component, the content of which in a top coat layer can increase the slipperiness of the top coat layer. An increase in the slipperiness of a top coat layer can be assessed by a smaller frictional coefficient of the top coat layer. "Binder" in a top coat layer refers to a basic component that contributes to the formation of the top coat layer. "Polyester resin" refers to a resin comprising a polyester (which refers to a polymer having a main chain formed by ester bonding among monomers) as the primary component (typically, a component contained at greater than 50 % by mass). "Acrylic PSA" refers to a PSA comprising an acrylic polymer as the base polymer (the primary component of all the polymers; i.e., a component contained at greater than 50 % by mass). "Acrylic polymer" refers to a polymer comprising a monomer having at least one (meth)acryloyl group per molecule (or an "acrylic monomer" hereinafter) as the primary monomeric component (primary monomer; i.e., a monomer that accounts for 50 % by mass or greater of all the monomers constituting the acrylic polymer). The term "(meth)acryloyl group" comprehensively refers to an acryloyl group and a methacryloyl group. Similarly, the term "(methacrylate" comprehensively refers to acrylate and methacrylate. In the present description, the term "alkylene oxide chain" comprehensively refers to an oxyalkylene group (-OR-) as well as a fragment (a partial structure that can be represented by -(OR)ₙ- with n being equal to or larger than two, which can be understood as a polyalkylene oxide chain) having two or more repeats of an oxyalkylene group.

### <Constitution and application of surface protection film>

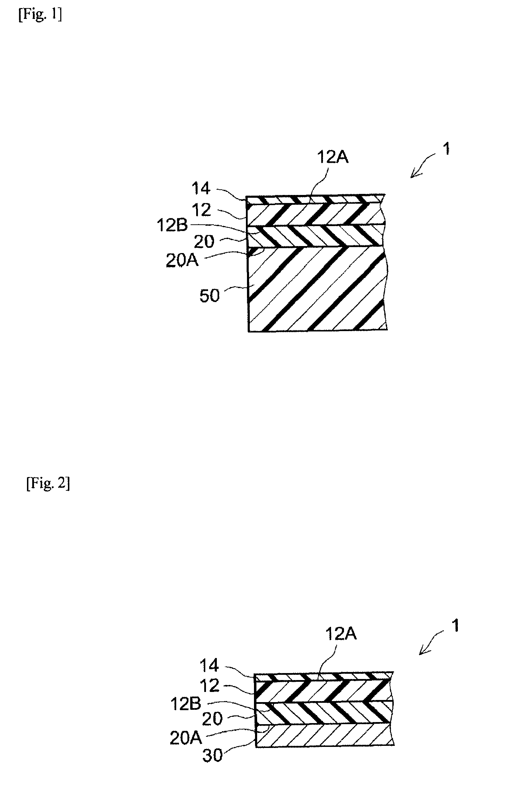

Fig. 1 shows an example of a typical constitution and application of the surface protection film disclosed herein. Surface protection film I comprises a substrate 12 having a first face 12A and a second face 12B, top coat layer 14 provided on top of the first face (back face) 12A, and a PSA layer 20 provided on the second face (front face) 12B. Substrate 12 in the present example is a transparent resin film (e.g., a polyester resin film). In the present example, as shown in Fig. 1, top coat layer 14 is provided directly (via no other layers) on top of the first face 12A. PSA layer 20 typically has, but not limited to a continuous form, and may have, for instance, a regular or a random pattern of dots, stripes, etc. Surface protection film 1 is used such that surface 20A (adhesive face, i.e., the surface to be adhered to an adherend) of PSA layer 20 is adhered to an adherend 50 (an object to be protected, e.g., an optical component such as a polarizing plate, etc.). Prior to use (i.e., before adhered to an adherend), surface protection film 1 may be in a state, typically as shown in Fig. 2, where surface 20A of PSA layer 20 is protected with release liner 30. Release liner 30 has a release face at least on the face that is placed over PSA layer 20.

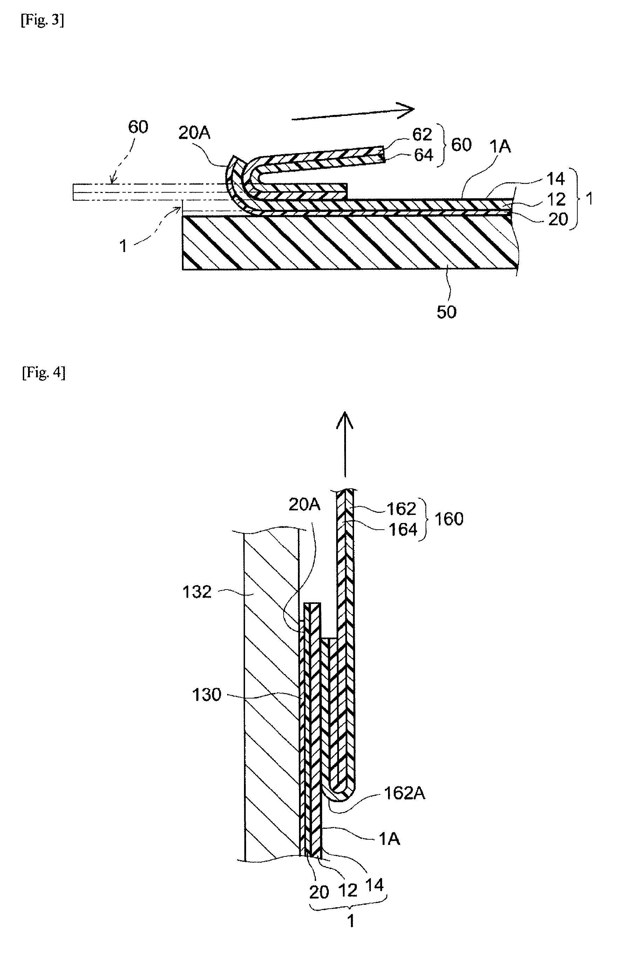

Unnecessary surface protection film 1 after use as a protective means for adherend 50 can be peeled away and removed from the surface of adherend 50. Surface protection film 1 can be preferably removed from the surface of adherend 50, for instance, as shown in Fig. 3, by a process comprising: adhering PSA tape 60 to back face 1A (the surface of top coat layer 14) of surface protection film 1, and lifting up at least part (typically, at least part of the outer edges) of surface protection film 1 along with the PSA tape (pick-up tape) 60 from the surface of adherend 50. As such, by pulling surface protection film 1 by pick-up tape 60 adhered to its back face 1A, using the adhesive strength of pick-up tape 60 to the back face 1A, peeling of surface protection film 1 away from adherend 50 can be initiated. According to such an embodiment, surface protection film 1 can be efficiently removed from adherend 50. For instance, pick-up tape 60 is adhered to the back face 1A of surface protection film 1 such that, as shown by the imaginary line in Fig. 3, one of its edges would run off the outer edge of surface protection film 1. As shown by the solid line in Fig. 3, by gripping the run-off edge of pick-up tape 60, surface protection film I can be pulled so that it is folded (turned) from the outer edge toward the inside. Once the outer edge of surface protection film 1 is peeled away from adherend 50 as shown in Fig. 3, the remaining portion of surface protection film 1 can be peeled away from adherend 50 by pulling it continuously by pick-up tape 60 or by directly gripping a portion of surface protection film 1 that have been already peeled away from adherend 50.

### <Substrate>

As the substrate of the surface protection film disclosed herein, a resin film can be preferably used. Such a resin film may have been formed of a resin material of various types. A preferable resin material is able to constitute a resin film that exhibits excellence in one, two or more properties among transparency, mechanical strength, thermal stability, waterproofing ability, isotropy, etc. For example, as the substrate, can be preferably used a transparent (colored or uncolored) resin film constituted from a resin material comprising, as the primary component (i.e., a component contained at greater than 50 % by mass), a polyester such as polyethylene terephthalate (PET), polyethylene naphthalate (PEN), polybutylene terephthalate, etc.; a cellulose such as diacetyl cellulose, triacetyl cellulose, etc.; a polycarbonate; an acrylic polymer such as polymethyl methacrylate, etc.; or the like. Other examples of the resin material constituting the resin film include materials comprising as the primary component styrenes such as polystyrene, acrylonitrile-styrene copolymers, etc.; olefins such as polyethylene, polypropylene, polyolefins having a cyclic or a norbornene structure, ethylene-propylene copolymers, etc.; polyvinyl chlorides; polyamides such as nylon 6, nylon 6,6, aromatic polyamides, etc.; and the like. Alternatively, for the substrate, can be used a resin film constituted from a resin material comprising as the primary component a polyimide, a polysulfone, a polyethersulfone, a polyetheretherketone, a polyphenylene sulfide, a polyvinyl alcohol, a poly(vinylidene chloride), a poly(vinyl butyral), a polyarylate, a polyoxymethylene, an epoxy, or the like. The resin material constituting the resin film may be a blend of two or more species among these.

A preferable resin film for the substrate is transparent and has small anisotropy of optical properties (retardation, etc.). In general, the smaller the anisotropy, the more preferable the resin film. Especially in a resin film used as the substrate of a surface protection film for optical components, it is meaningful to reduce the optical anisotropy of the resin film. The resin film may consist of a single layer or overlaid multiple layers having different compositions. In typical, can be preferably used a resin film consisting of a single layer.

From the standpoint of the visual properties, it is usually suitable that the resin film has a refractive index in a range of about 1.43 to 1.6, or preferably in a range of about 1.45 to 1.5. For the refractive index values, can be used values declared by manufacturers. Where no value is declared, can be used a value measured by method A of JIS K7142. The resin film preferably has transparency that corresponds to a total visible light transmittance of about 70 % to 99 %. A more preferable transparent resin film has a total visible light transmittance of 80 % to 97 % (e.g., 85 % to 95 %). As the total visible light transmittance values, can be used values declared by manufacturers. Where no value is declared, can be used a value measured based on JIS K7361-1.

In a preferable embodiment of the art disclosed herein, as the substrate, is used a resin film (polyester resin film) formed from a resin (polyester resin) comprising a polyester as the primary component (a component contained at greater than 50 % by mass). For example, can be preferably used a resin film (PET film) in which the polyester is primarily PET, a resin film (PEN film) in which the polyester is primarily PEN, or the like.

The resin material constituting the substrate may contain various additives as necessary such as antioxidants, ultraviolet(UV)-ray absorbing agents, antistatic ingredients, plasticizers, colorants (pigments, dyes, etc.) and the like. The first face (back face, i.e., the surface on the side to which a top coat layer is provided) of the substrate may have been subjected to a known or commonly employed surface treatment such as a corona discharge treatment, plasma treatment, UV-ray irradiation, acid treatment, base treatment, primer coating, or the like. These surface treatments may be given, for instance, to increase the adhesion between the substrate's back face and the top coat layer. A preferably employed surface treatment introduces a polar group such as hydroxyl group (-OH group) to the substrate's back face. In the surface protection film disclosed herein, the second face (front face, i.e., the surface on the side where a PSA layer is formed) of the substrate may have been subjected to a surface treatment similar to those for the back face. Such a surface treatment may be given to increase the adhesion (anchoring) of the PSA layer to the substrate (support).

The thickness of the substrate can be suitably selected in view of the intended use, purpose, application, etc., of the surface protection film. For a balance among the workability such as the strength, handling properties, etc., the costs, and the ease of visual inspection, etc., in usual, the substrate has a thickness of suitably about 10 µm to 200 µm, preferably about 15 µm to 100 µm, or more preferably about 20 µm to 70 µm.

### <Binder>

The surface protection film disclosed herein comprises a top coat layer on the back face (first face) of the substrate. The top coat layer comprises a polyester resin as a binder and a wax as a slip agent. The polyester resin is a resin material comprising a polyester as the primary component (a component contained at typically greater than 50 % by mass, preferably 75 % by mass or greater, e.g., 90 % by mass or greater). The polyester typically has a structure resulting from condensation of one, two or more compounds (polycaroboxylic acid components) selected from polycarboxylic acids (typically dicarboxyl ic acids) having two or more carboxyl groups per molecule and their derivatives (anhydride, esterification products, halogenartion products, etc., of the polycarboxylic acids), and one, two or more compounds (polyol components) selected from polyols (typically diols) having two or more hydroxyl groups per molecule.

Examples of a compound that can be used as the polycarboxylic acid component include aliphatic dicarboxylic acids, such as oxalic acid, malonic acid, difluoromalonic acid, alkylmalonic acids, succinic acid, tetrafluorosuccinic acid, alkylsuccinic acids, (±)-malic acid, meso-tartaric acid, itaconic acid, maleic acid, methylmaleic acid, fumaric acid, methylfumaric acid, acetylene dicarboxylic acid, glutaric acid, hexafluoroglutaric acid, methylglutaric acid, glutaconic acid, adipic acid, dithioadipic acid, methyladipic acid, dimethyladipic acid, tetramethyladipic acid, methylene adipic acid, muconic acid, galactaric acid, pimelic acid, suberic acid, perfluorosuberic acid, 3,3,6,6-tetramethylsuberic acid, azelaic acid, sebacic acid, perfluorosebacic acid, brassylic acid, dodecyl dicarboxylic acid, tridecyl dicarboxylic acid, tetradecyl dicarboxylic acid, etc.; alicyclic dicarboxylic acids such as cycloalkyl dicarboxylic acids (e.g., 1,4-cyclohexane dicarboxylic acid, 1,2-cyclohexane dicarboxylic acid), 1,4-(2-norbomene)dicarboxylic acid, 5-norbornene-2,3-dicarboxylic acid (Himic acid), adamantane dicarboxylic acid, spiroheptane dicarboxylic acid, etc.; aromatic dicarboxylic acids such as phthalic acid, isophthalic acid, dithioisophthalic acid, methylisophthalic acid, dimethylisophthalic acid, chloroisophthalic acid, dichloroisophthalic acid, terephthalic acid, methylterephthalic acid, dimethylterephthalic acid, chloroterephthalic acid, bromoterephthalic acid, naphthalene dicarboxylic acid, oxofluorene dicarboxylic acid, anthracene dicarboxylic acid, biphenyl dicarboxylic acid, biphenylene dicarboxylic acid, dimethyl biphenylene dicarboxylic acid, 4,4"-p-terphenylene dicarboxylic acid, 4,4"-p-quaterphenyl dicarboxylic acid, bibenzyl dicarboxylic acid, azobenzene dicarboxylic acid, homophthalic acid, phenylene diacetic acid, phenylene dipropionic acid, naphthalene dicarboxylic acid, naphthalene dipropionic acid, biphenyl diacetic acid, biphenyl dipropionic acid, 3,3'-[4,4'-(methylene dip-biphenylene) dipropionic acid, 4,4'-bibenzyl diacetic acid, 3,3'(4,4'-bibenzyl) dipropionic acid, oxy-dip-phenylene diacetic acid, etc.; acid anhydrides of the polycarboxylic acids listed earlier; esters (e.g., alkyl esters; which can be monoesters, diesters, etc.) of the polycarboxylic acids listed earlier; halogenated compounds (e.g., dicarboxylic acid chlorides) corresponding to the polycarboxylic acids listed earlier; and the like.

Preferable examples of a compound that can be used as the polycarboxylic acid component include aromatic dicarboxylic acids such as terephthalic acid, isophthalic acid, naphthalene dicarboxylic acid, etc., as well as acid anhydrides thereof; aliphatic dicarboxylic acids such as adipic acid, sebacic acid, azelaic acid, succinic acid, fumaric acid, maleic acid, Himic acid, 1,4-cyclohexane dicarboxylic acid, etc., as well as acid anhydrides thereof; lower alkyl esters (e.g., esters of mono-alcohols having 1 to 3 carbon atoms) of the dicarboxylic acids listed above, and the like.

On the other hand, examples of a compound that can be used as the polyol component include diols such as ethylene glycol, propylene glycol, 1,2-propanediol, 1,3-propanediol, 1,3-butanediol, 1,4-butanediol, neopentyl glycol, 1,5-pentanediol, 1,6-hexanediol, 3-methylpentanediol, diethylene glycol, 1,4-cyclohexanedimethanol, 3-methyl-1,5-pentanediol, 2-methyl-1,3-propanediol, 2,2-diethyl-1,3-propanediol, 2-butyl-2-ethyl-1,3-propanediol, xylene glycol, hydrogenated bisphenol A, bisphenol A, and the like. Other examples include alkylene oxide adducts (e.g., ethylene oxide adducts, propylene oxide adducts, etc.) of these compounds.

In a preferable embodiment, the polyester resin comprises a water-dispersible polyester (typically, comprising the water-dispersible polyester as the primary component). Such a water-dispersible polyester may have a greater water-dispersibility due to a hydrophilic functional group (e.g., one, two or more species among hydrophilic functional groups such as metal sulfonate groups, carboxyl group, ether group, phosphate group, etc.) that had been introduced into the polymer. As a means to introduce a hydrophilic functional group to the polymer, can be suitably employed a known method such as a method that allows copolymerization of a compound having a hydrophilic functional group, a method that allows formation of a hydrophilic group via modification of a polyester or its precursor (e.g., polycarboxylic acid component, polyol component, an oligomer thereof, etc.), or like methods. As an example of a preferable water-dispersible polyester, can be cited a polyester (polyester copolymer) in which a compound having a hydrophilic functional group has been copolymerized.

In the art disclosed herein, the polyester resin used as the binder in the top coat layer may comprise a saturated polyester or an unsaturated polyester as the primary component. In a preferable embodiment of the art disclosed herein, the polyester resin comprises a saturated polyester as the primary component. A preferable polyester resin comprises a saturated polyester (e.g., a saturated polyester copolymer) with water-dispersibility.
Such a polyester resin (which may have been prepared as a water dispersion) can be synthesized by a known method, or a commercially available product can be readily obtained.

The polyester resin may have a weight average molecular weight (Mw) of, for instance, about 0.5 × 10⁴ to 15 × 10⁴ (preferably about 1 × 10⁴ to 6 × 10⁴) based on standard polystyrene when measured by gel permeation chromatography (GPC). The polyester resin may have a glass transition temperature (Tg) of, for instance, 0 °C to 100 °C (preferably 10 °C to 80 °C).

Besides a polyester resin, the top coat layer may further comprise, as the binder, other resin(s) (e.g., one, two or more resin species selected from acrylic resins, acrylic urethane resins, acrylic styrene resins, acrylic silicone resins, silicone resins, polysilazane resins, polyurethane resins, fluorocarbon resins, polyolefin resins and the like) to a limited extent that would not largely impair the properties (e.g., properties such as the transparency, scratch resistance, clouding resistance, etc.) of the surface protection film disclosed herein. In a preferable embodiment of the art disclosed herein, the binder in the top coat layer consists essentially of a polyester resin. For example, in a preferable top coat layer, the polyester resin accounts for 98 to 100 % by mass of the binder. The amount of the binder can be, for instance, 50 to 95 % by mass of the top coat layer, and it is usually suitable to be 60 to 90 % by mass.

### <Slip agent>

The top coat layer in the art disclosed herein comprises as a slip agent an ester (or a "wax ester" hereinafter) of a higher fatty acid and a higher alcohol. Here, the term "higher fatty acid" refers to a carboxylic acid (typically a monovalent carboxylic acid) having 8 or more (typically 10 or more, preferably 10 or more, but 40 or fewer) carbon atoms. The term "higher alcohol" refers to an alcohol (typically a monovalent or a divalent alcohol, preferably a monovalent alcohol) having 6 or more (typically 10 or more, preferably 10 or more, but 40 or fewer) carbon atoms. A top coat layer having a composition that contains such a wax ester and the binder (a polyester resin) described above in combination is less susceptible to clouding even when stored under a hot-humid condition. Thus, a surface protection film comprising such a top coat layer may have greater visual quality.

When practicing the art disclosed herein, it is unnecessary to reveal why higher clouding resistance (e.g., a property to resist clouding even when stored under a hot-humid condition) can be produced by the top coat layer having the constitution described above; however, one possibility may be as follows: A conventionally-used silicone-based slip agent is presumed to bleed to the surface of a top coat layer and provides slipperiness to the surface. However, the extent of bleeding of these silicone-based slip agents is likely to fluctuate due to differences in the storage conditions (temperature, humidity, time length, etc.). Thus, for example, if the amount of a silicone-based slip agent used had been chosen so as to continuously provide suitable slipperiness under a typical storage condition (e.g., 25 °C, 50 % RH) for a relatively long time (e.g., about three months) following the production of the surface protection film, and if this surface protection film is stored under a hot-humid condition (e.g., 60 °C, 95 % RH) for two weeks, bleeding of the slip agent will proceed excessively. Such excessive bleeding of a silicone-based slip agent will turn the top coat layer (and even the surface protection film) cloudy.
The art disclosed herein employs a specific combination of a slip agent and a binder for a top coat layer, namely, a wax ester as the slip agent and a polyester resin as the binder for the top coat layer. According to such a combination of a slip agent and a binder, the extent of bleeding of the wax ester out of the top coat layer is less likely to be affected by storage conditions. By this, the clouding resistance of the surface protection film is considered to be increased.

As the wax ester, can be used one, two or more species among compounds represented by the following general formula (W):

X-COO-Y (W)

Here, each of X and Y in the formula (W) can be independently selected from hydrocarbon groups having 10 to 40 (more preferably 10 to 35, even more preferably 14 to 35, e.g., 20 to 32) carbon atoms. With too few carbon atoms, the effect to provide slipperiness to the top coat layer may turn out insufficient. The hydrocarbon group may be saturated or unsaturated. A saturated hydrocarbon group is usually preferable. The hydrocarbon group may have a structure containing an aromatic ring, or a structure containing no aromatic rings (i.e., an aliphatic hydrocarbon group). It may be a hydrocarbon group (an alicyclic hydrocarbon group) containing an aliphatic ring system, or an acyclic (meaning to include a straight chain and a branched chain) hydrocarbon group.

Examples of a preferable wax ester in the art disclosed herein include a compound represented by formula (W) wherein each of X and Y is independently an acyclic alkyl group (more preferably a straight chain alkyl group) having 10 to 40 carbon atoms. Specific examples of such a compound include myricyl cerotate (CH₃(CH₂)₂₄COO(CH₂)₂₉CH₃), myricyl palmitate (CH₃(CH₂)₁₄COO(CH₂)₂₉CH₃), cetyl palmitate (CH₃(CH₂)₁₄COO(CH₂)₁₅CH₃), stearyl stearate (CH₃(CH₂)₁₆COO(CH₂)₁₇CH₃), and the like.

The wax ester has a melting point of preferably 50 °C or above (more preferably 60 °C or above, even more preferably 70 °C or above, e.g., 75 °C or above). According to such a wax ester, can be obtained higher clouding resistance. The wax ester preferably has a melting point of 100 °C or below. Since such a wax ester is highly effective in providing slipperiness, can be formed a top coat layer having higher scratch resistance. The wax having a melting point of 100 °C or below is preferable also in view that a water dispersion of the wax ester can be readily prepared. For example, myricyl cerotate can be preferably used.

As the material of the top coat layer, can be used a natural wax containing such a wax ester. A preferable natural wax has a wax ester content (when two or more wax ester species are contained, their total content) of greater than 50 % by mass (preferably a 65 % by mass or greater, e.g., a 75 % by mass or greater) based on the non-volatile content (NV). Examples of natural wax that can be used include vegetable waxes such as carnauba wax (generally containing myricyl cerotate at 60 % by mass or greater, preferably 70 % by mass or greater, typically 80 % by mass or greater), palm wax, etc.; animal waxes such as beeswax, spermaceti, etc.; and the like. In usual, a natural wax to be used has a melting point of preferably 50 °C or above (more preferably 60 °C or above, even more preferably 70 °C or above, e.g., 75 °C or above). As for the material of the top coat layer, can be used either a chemically synthesized wax ester or a natural wax that has been purified to increase its wax ester content (its purity as the wax ester). Among these materials, can be used one species solely, or a suitable combination of a few species.

The amount of the slip agent contained in the top coat layer can be 5 to 50 % by mass, and it is usually suitable to be 10 to 40 % by mass. Too low a slip agent content may tend to result in lower scratch resistance. With too high a slip agent content, the effect to increase the clouding resistance may be likely to turn out insufficient.

The art disclosed herein can be practiced in an embodiment where the top coat layer contains other slip agent(s) besides the wax ester to a limited extent that would not largely impair the effects obtainable by the art. Examples of such other slip agents include various waxes excluding wax esters, such as petroleum-based waxes (paraffin wax, etc.), mineral-based waxes (montan wax, etc.), higher fatty acids (cerotic acid, etc.), neutral fats (paltimic acid triglyceride, etc.) and the like. Alternatively, in addition to the wax ester, a general silicone-based slip agent, or a fluorine-based slip agent, etc., may be contained supplementarily. The art disclosed herein can be practiced preferably in an embodiment essentially free of such a silicone-based slip agent, a fluorine-based slip agent, and the like (e.g., an embodiment where their combined content is 0.01 % by mass of the entire top coat layer, or below the detection limit.). It is noted, however, that as far as the effects obtainable by the art disclosed herein are not significantly impaired, it is not to exclude a silicone-based compound content used for a different purpose (e.g., as a defoaming agent in a top-coat material mixture described later) other than that as a slip agent.

The top coat layer in the art disclosed herein may contain, as necessary, additives such as antistatic ingredients, crosslinking agent, antioxidant, colorants (pigments, dyes, etc.), rheology-adjusting agents (thixotropic agent, thickener, etc.), film-formation agents, surfactants (antifoaming agent, dispersing agent, etc.), preservatives and so on.

### <Antistatic ingredient in top coat layer>

The art disclosed herein can be practiced preferably in an embodiment where the top coat layer comprises an antistatic ingredient. The antistatic ingredient may prevent or suppress static buildup in the surface protection film. When the top coat layer comprises an antistatic ingredient, as the antistatic ingredient, can be used, for instance, an organic or inorganic conductive substance, an antistatic agent of various types, or the like.

Examples of the conductive organic substances include a cationic antistatic agent having a cationic functional group such as quaternary ammonium group, pyridinium group, primary amine group, secondary amine group, tertiary amine group, etc.; an anionic antistatic agent having an anionic functional group such as sulfonate group, sulfate group, phosphonate group, phosphate group, etc.; zwitterionic antistatic agents such as alkyl betaines and derivatives thereof, imidazoline and derivatives thereof, alanine and derivatives thereof, etc.; nonionic antistatic agents such as amino alcohols and derivatives thereof, glycerin and derivatives thereof, polyethylene glycol and derivatives thereof, etc.; ion-conductive polymers obtained by polymerizing or copolymerizing a monomer species having the cationic, anionic or zwitterionic ion-conductive group (e.g., quaternary ammonium group); conductive polymers such as polythiophene, polyaniline, polypyrrol, polyethyleneimine, allylamine-based polymers, etc.. Among these antistatic agents, can be used one species alone, or two or more species in combination.

Examples of the conductive inorganic substances include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, ITO (indium oxide/tin oxide), ATO (antimony oxide/tin oxide) and the like. Among these conductive inorganic substances, can be used one species alone, or two or more species in combination.

Examples of the antistatic agent include cationic antistatic agents, anionic antistatic agents, nonionic antistatic agents, ion-conductive polymers obtained by polymerization or copolymerization of a monomer having the cationic, anionic or zwitterionic ion-conducting group, and the like.

In a preferable embodiment, the antistatic ingredient used in the top coat layer comprises an organic conductive substance. As the organic conductive substance, can be preferably used various conductive polymers. According to such an embodiment, good antistaticity and high scratch resistance are likely to be combined. Examples of conductive polymers include polythiophene, polyaniline, polypyrrole, polyethylene imine, allylamine-based polymers, and so on. Among these conductive polymers, one species may be used solely, or two or more species can be used in combination. Other antistatic ingredients (inorganic conductive substances, antistatic agents, etc.) can be used together as well. The amount of the conductive polymer used can be, for instance, 10 to 200 parts by mass relative to 100 parts by mass of the binder contained in the top coat layer, or it is usually suitable to be 25 to 150 parts by mass (e.g., 40 to 120 parts by mass). When the amount of the conductive polymer used is too small, the antistaticity may turn out lower. When the amount of the conductive polymer used is too large, the miscibility of the conductive polymer in the top coat layer may tend to be insufficient, whereby the visual quality of the top coat layer may be degraded, or the solvent resistance may tend to be reduced.

Examples of the conductive polymer preferably used in the art disclosed herein include a polythiophene and a polyaniline. The polythiophene has a weight average molecular weight (or "Mw" hereinafter) of preferably 40 × 10⁴ or smaller based on standard polystyrene, or more preferable 30 × 10⁴ or smaller. The polyaniline has a Mw of preferably 50 × 10⁴ or smaller, or more preferably 30 × 10⁴ or smaller. The Mw values of these conductive polymers are usually preferable to be 0.1 × 10⁴ or greater, or more preferable to be 0.5 × 10⁴ or greater. In this description, polythiophene refers to a non-substituted or substituted polythiophene. Poly(3,4-ethylenedioxythiophene) can be cited as a preferable example of a substituted polythiophene in the art disclosed herein.

When a top coat layer-forming coating mixture is applied to a substrate and allowed to dry or cure to form a top coat layer, as a conductive polymer used for preparation of the coating mixture, a solution or a dispersion of the conductive polymer in water (an aqueous conductive polymer solution) can be preferably used. Such an aqueous conductive polymer solution can be prepared, for instance, by dissolving or dispersing in water a hydrophilic functional group-containing conductive polymer (which can be synthesized by copolymerization of a monomer species containing a hydrophilic functional group within the molecule, or by like methods). Examples of the hydrophilic functional group include sulfo group, amino group, amide group, imino group, hydroxyl group, mercapto group, hydrazino group, carboxyl group, quaternary ammonium group, sulfate group (-O-SO₃H), phosphate group (e.g., -O-PO(OH)₂), and so on. Such a hydrophilic functional group may be present in a form of a salt. Examples of a commercially available aqueous polythiophene solution include trade name "DENATRON" series available from Nagase ChemteX Corporation. Examples of a commercially available aqueous polyaniline sulfonate solution include trade name "AQUA-PASS" available from Mitsubishi Rayon Co., Ltd.

In a preferred embodiment of the art disclosed herein, an aqueous polythiophene solution is used to prepare the coating mixture. An aqueous polythiophene solution containing a polystyrene sulfonate (PSS) (which may be in a form where a PSS is added as a dopant to a polythiophene) is preferably used. Such an aqueous solution may contain a polythiophene, and a PSS at a weight ratio of 1:1 to 1:10. The total amount of the polythiophene and the PSS contained in the aqueous solution can be, for instance, about 1 to 5 % by mass. Examples of commercially available aqueous polythiophene solutions of this sort include trade name "BAYTRON" available from H. C. Stark GmbH.
When an aqueous polythiophene solution containing a PSS is used as described above, the combined amount of the polythiophene and the PSS can be, relative to 100 parts by mass of the binder, 5 to 200 parts by mass (usually, 10 to 100 parts by mass, e.g., 25 to 70 parts by mass).

The top coat layer disclosed herein may further comprise, as necessary, a conductive polymer and one, two or more other species of antistatic ingredient (conductive organic substances, conductive inorganic substances, antistatic agents, or the like other than conductive polymers). In a preferable embodiment, the top coat layer is essentially free of other antistatic ingredients besides a conductive polymer. In other words, the art disclosed herein can be practiced preferably in an embodiment where the the antistatic ingredient contained in the top coat layer consists essentially of a conductive polymer.

### <Crosslinking agent>

In a preferable embodiment of the art disclosed herein, the top coat layer comprises a crosslinking agent. As the crosslinking agent, a suitable one can be selected and used from those generally used for resin crosslinking such as melamine-based, isocyanate-based, epoxy-based crosslinking agents. With use of such a crosslinking agent, at least one of the following effects can be attained: increased scratch resistance, increased solvent resistance, increased ink adhesion, and a reduced frictional coefficient (i.e., greater slipperiness). In a preferable embodiment, the crosslinking agent comprises a melamine-based crosslinking agent. The crosslinking agent in the top coat layer may consist essentially of a melamine-based crosslinking agent (i.e., not containing other crosslinking agents besides a melamine-based crosslinking agent).

### <Fomation of top coat layer>

The top coat layer can be preferably formed by a method comprising: preparing a liquid composition (a coating mixture for forming a top coat) by dispersing or dissolving in a suitable solvent the resin component as well as additive used as necessary, and applying the liquid composition to a substrate. For instance, a preferably employed method comprises: applying the coating mixture to a first face of a substrate, allowing it to dry, and subjecting the resultant to a curing process (a thermal treatment, a UV-ray treatment, etc.). The NV of the coating mixture can be 5 % by mass or less (typically, 0.05 to 5 % by mass) and is usually suitable to be 1 % by mass or less (typically, 0.1 to 1 % by mass). For forming a thin top coat layer, the coating mixture preferably has an NV of, for instance, 0.05 to 0.50 % by mass (e.g., 0.10 to 0.30 % by mass). With use of a coating mixture having such a low NV, a more uniform top coat layer can be formed.

A preferred solvent to constitute the top-coat material mixture can produce consistent dissolution or dispersion of the top-coat components. Such a solvent may be an organic solvent, water, or a mixture of these. As the organic solvent, can be used, for example, one, two or more species selected from esters such as ethyl acetate, etc.; ketones such as methyl ethyl ketone, acetone, cyclohexanone, etc.; cyclic ethers such as tetrahydrofuran (THF), dioxane, etc.; aliphatic or alicyclic hydrocarbons such as n-hexane, cyclohexane, etc.; aromatic hydrocarbons such as toluene, xylene, etc.; aliphatic or alicyclic alcohols such as methanol, ethanol, n-propanol, isopropanol, cyclohexanol, etc.; glycol ethers such as alkylene glycol monoalkyl ethers (e.g., ethylene glycol monomethyl ether, ethylene glycol monoethyl ether); and so on. In a preferable embodiment, the solvent of the coating mixture is water or a mixed solvent (e.g., a mixture of water and ethanol) comprising primarily water.

### <Features of top coat layer>

In the art disclosed herein, the top coat layer has a thickness of typically 3 nm to 500 nm (preferably 3 nm to 100 nm, e.g., 3 nm to 60 nm). When the top coat layer is too thick, the transparency (light transmittance) of the surface protection film tends to decline. On the other hand, the top coat layer is too thin, the top coat layer tends to be less uniform (e.g., large local deviations in the thickness of the top coat layer may occur), whereby the appearance of the surface protection film may turn out inconsistent.

In a preferable embodiment of the art disclosed herein, the top coat layer has a thickness of 3 nm or larger, but smaller than 30 nm (e.g., 3 nm or larger, but smaller than 10 nm). A surface protection film comprising such a top coat layer may have even greater visual quality. According to a surface protection film having such a good visual quality, visual inspection of a product (adherend) can be performed more accurately through the film. The thin top coat layer is preferable also in view that the properties (optical properties, size stability, etc.) of the substrate are less likely to be affected.

The thickness of the top coat layer can be determined by observing cross sections of the top coat layer with a transmission electron microscope (TEM). For instance, a sample (which may be a substrate with a top coat layer formed thereon, or a surface protection film comprising the said substrate, etc.) of interest may be stained with a heavy metal to make the top coat layer distinguishable, embedded with resin, and sliced ultrathin for TEM analysis of a sample's cross section, and the resulting data can be used as the thickness of the top coat layer in the art disclosed herein. As for the TEM, can be used a TEM system under model number "H-7650" available from Hitachi, Ltd. In the worked examples described later, with respect to a cross-sectional image obtained at an accelerating voltage of 100 kV and a magnification of × 60,000, after a binarization process, the area of the cross section was divided by the sample length in the viewing field to determine the actual thickness (average thickness in the viewing field) of the top coat layer.
If the top coat layer is sufficiently distinguishable for observation without any heavy-metal staining, the heavy-metal staining process may be omitted. Alternatively, the thickness of the top coat layer can be determined by computation from a calibration curve prepared based on correlations between the thickness determined by TEM and results detected by various other thickness measuring devices (e.g., a surface profile gauge, an interferometric thickness gauge, an infrared spectrometer, various X-ray diffractometers, and so on).

In a preferable embodiment of the surface protection film disclosed herein, the top coat layer has a surface resistivity of 10¹² Ω or lower (typically 10⁶ Ω to 10¹² Ω) when measured with respect to its surface. A surface protection film having such a surface resistivity can be preferably used during processing or transport, etc., of products that should avoid static electricity, such as liquid crystal cells, semiconducting devices, and the like. A preferable surface protection film has a surface resistivity of 10¹¹ Ω or lower (typically 5 × 10⁶ Ω to 10¹¹ Ω, e.g., 10⁷ Ω to 10¹⁰ Ω). The surface resistivity value can be computed from a surface resistivity value measured under an atmosphere at 23 °C and 50 % RH using a commercially available insulation resistance meter.

The top coat layer has a frictional coefficient of preferably 0.4 or smaller. By use of a top coat layer having such a small frictional coefficient, when a load (a load that may produce scratches) is applied to the top coat layer, the load can be distributed over the surface of the top coat layer, whereby the frictional force by the load can be reduced. As such, the top coat layer will be less likely to undergo a cohesive failure (a mode of failure where the top coat layer suffers an internal failure) or an interfacial failure (a mode of failure where the top coat layer is separated from the back face of the substrate). Thus, the surface protection film can be better prevented from receiving scratches. The lower limit of the frictional coefficient is not particularly limited. From the standpoint of balancing with the other properties (visual quality, ink adhesion, etc.), the frictional coefficient is usually suitable to be 0.1 or larger (typically, 0.1 or higher, but 0.4 or smaller) and preferable to be 0.15 or larger (typically, 0.15 or larger, but 0.4 or smaller). As the frictional coefficient, for instance, can be used a value determined by rubbing the top coat layer surface with a vertical load of 40 mN in a measurement environment at 23 °C and 50 % RH. The amount of the wax ester (slip agent) used can be selected so as to obtain the preferable frictional coefficient. The frictional coefficient can be effectively adjusted by, for instance, increasing the crosslinking degree of the top coat layer by modifying the conditions under which the crosslinking agent is added or the top coat layer is formed.

The back face (top coat layer surface) of the surface protection film disclosed herein preferably has properties that allow easy adhesion of oil-based inks (e.g., with use of oil-based markers). The surface protection film is suitable for indicating on itself item identification numbers, etc., of adherends (e.g., optical components) to be protected during processing, transport, etc., of the adherends with the surface protection film adhered thereon. Thus, a preferable surface protection film should exhibit good ink adhesion in addition to good visual quality. For example, it preferably exhibits a high degree of adhesion to oil-based inks containing pigments in an alcohol-based solvent. The surface protection sheet is preferably unsusceptible to disappearance of printed ink due to friction or transferring (i.e., it exhibits good ink adhesion). The surface protection disclosed herein preferably has solvent resistance such that printed ink can be wiped offwith an alcohol (e.g., ethanol) for modification or deletion without visible alteration of the appearance. The level of the solvent resistance can be assessed by, for instance, the solvent resistance test described later.
The top coat layer in the art disclosed herein comprises a wax ester as a slip agent. Thus, even in an embodiment where the top coat layer surface is not subjected to a further release treatment (e.g., a process where a known release treatment agent such as a silicone-based release agent, long-chain alkyl-based release agent, etc., is applied and allowed to dry), sufficient slipperiness (e.g., a preferable frictional coefficient described earlier) can be obtained. Such an embodiment where the top coat layer surface is not subjected to a further release treatment is preferable in view that clouding due to a release treatment agent (e.g., clouding due to storage under a hot-humid condition) can be prevented, and in the like view. It is advantageous also in view of the solvent resistance.

### <PSA layer>

The surface protection film disclosed herein comprises a PSA layer on the second face of the substrate. A preferable PSA layer has properties (such as one, two or more features among an adhesive strength not too high to an adherend, minimal chronological increase in the adhesive strength, being anti-contaminating to adherends, and so on) suitable for a surface protection film. The type of PSA constituting the PSA layer is not particularly limited. For example, the PSA layer may comprise one, two or more species selected from various known PSAs such as acrylic, polyester-based, urethane-based, polyether-based, rubber-based, silicone-based, polyamide-based, fluorine-based PSAs and the like.

### <Acrylic PSA>

In a preferable embodiment, the PSA constituting the PSA layer comprises an acrylic PSA. For example, in a preferable surface protection film, the PSA layer is constituted with an acrylic PSA. Since an acrylic PSA is highly transparent in general, according to the constitution described above, can be obtained a surface protection film that can provide great visibility of the adherend through itself.
With a surface protection film comprising a PSA layer constituted from an acrylic PSA as the main example, the art disclosed herein is described more in detail below although the PSA layer is not to be limited to a layer formed of an acrylic PSA.

### <Acrylic polymer>

The acrylic polymer as the base polymer of the acrylic PSA typically comprises an alkyl (meth)acrylate as the primary monomer. As the alkyl (meth)acrylate, can be preferably used, for instance, a compound represented by the following formula (1):

CH₂=C(R¹)COOR² (1)

Here, in the formula (1), R¹ is a hydrogen atom or a methyl group. R² is an alkyl group (which means to include both acyclic alkyl groups and alicyclic alkyl groups) having 1 to 20 carbon atoms. Because of the likelihood that a PSA having great adhesive properties can be obtained, it is preferable that the alkyl (meth)acrylate has an acyclic alkyl group (which means to include both straight chain alkyl groups and branched alkyl groups) having 2 to 14 carbon atoms (such a range of the number of carbon atoms may be represented by C₂₋₁₄ hereinafter). Specific examples of a C₂₋₁₄ acyclic alkyl group include ethyl group, propyl group, isopropyl group, n-butyl group, isobutyl group, s-butyl group, t-butyl group, n-pentyl group, isoamyl group, neopentyl group, n-hexyl group, n-heptyl group, n-octyl group, isooctyl group, 2-ethylhexyl group, n-nonyl group, isononyl group, n-decyl group, isodecyl group, n-undecyl group, n-dodecyl group, n-tridecyl group, n-tetradecyl group, and the like. Examples of an alicyclic alkyl group that can be selected for R² include cyclohexyl group, isobornyl group, and the like.

In a preferable embodiment, of the total amount of monomers used for synthesis of the acrylic polymer (or "all starting monomers" hereinafter), 50 % by mass or greater (typically 50 to 99.9 % by mass), or more preferably 70 % by mass or greater (typically 70 to 99.9 % by mass), for instance, 85 % by mass or greater (typically 85 to 99.9 % by mass) corresponds to one, two or more species selected from acyclic alkyl (meth)acrylates with R² in the formula (1) being a C₂₋₁₄ alkyl group (more preferably C₄₋₁₀ acyclic alkyl acrylates, e.g., one or each of n-butyl acrylate and 2-ethylhexyl acrylate). An acrylic polymer obtained from such a monomer composition is preferable because a PSA exhibiting adhesive properties suitable for surface protection films is likely to be formed.

As the acrylic polymer in the art disclosed herein, can be preferably used one obtained by copolymerizing an acrylic monomer having a hydroxyl group (-OH). Such a copolymer composition (monomer composition) can be preferably used especially when the acrylic polymer is synthesized by a solution polymerization method. Specific examples of acrylic monomers having a hydroxyl group include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 2-hydroxyheyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, polypropylene glycol mono(meth)acrylate, N-hydroxyethyl(meth)acrylamide, N-hydroxypropyl(meth)acrylamide, and the like. Among these hydroxyl group-containing acrylic monomers, can be used one species solely, or two or more species in combination. An acrylic polymer in which such a monomer has been copolymerized is preferable because it tends to yield a PSA that exhibits adhesive properties suitable for surface protection films. For example, since the peel strength to an adherend can be easily adjusted to a low level, a highly removable PSA can be readily obtained. Particularly preferable examples of a hydroxyl group-containing acrylic monomer include (meth)acrylates containing a hydroxyl group such as 2-hydroxyethyl (meth)actylate, 2-hydroxypropyl (meth)actylate, 3-hydroxypropyl (meth)acrylate, 2-hydroxybutyl (meth)acrylate and 4-hydroxybutyl (meth)acrylate.

Such a hydroxyl group-containing acrylic monomer is preferably used within a range of about 0.1 to 15% by mass, more preferably within a range of about 0.2 to 10% by mass and particularly preferably within a range of about 0.3 to 8% by mass of the total amount of monomers used to synthesize the acrylic polymer. When the hydroxyl group-containing acrylic monomer content is excessively greater than the above ranges, the cohesive strength of the PSA becomes excessively large, fluidity decreases and wettability (adhesion) to the adherend tends to decrease. On the other hand, when the hydroxyl group-containing acrylic monomer content is excessively less than the above ranges, it may become difficult to attain the effect of using the monomer to a satisfactory degree.

From the viewpoint of the ease of achieving balance among adhesive performance, normally an acrylic polymer having a glass transition temperature (Tg) of about 0 °C or below (typically, -100 °C to 0 °C) is used for the acrylic polymer in the art disclosed herein. An acrylic polymer having a Tg within the range of roughly -80 °C to -5 °C is more preferable. When the Tg value is excessively higher than the above ranges, the initial adhesiveness may be likely to be insufficient around ambient temperature, and workability of adhering a protection film may decrease. The Tg of the acrylic polymer can be adjusted by suitably modifying the monomer composition (namely, the types and ratios of the amounts of the monomers used in synthesis of the polymer).

Other monomers besides those described above may also be copolymerized in the acrylic polymer in the art disclosed herein within a range that does not remarkably impair the effects of the present invention. Such other monomers can be used for the purpose of, for example, adjusting the Tg of the acrylic polymer or adjusting the adhesive properties (e.g., removability). Examples of monomers capable of increasing the cohesive strength and the heat resistance of a PSA include sulfonic acid group-containing monomers, phosphoric acid group-containing monomers, cyano group-containing monomers, vinyl esters, aromatic vinyl compounds, and so on. In addition, examples of monomers that can introduce a functional group into the acrylic polymer that can become a crosslinking site or contribute to an increase in the adhesive strength include carboxyl group-containing monomers, acid anhydride group-containing monomers, amide group-containing monomers, amino group-containing monomers, imide group-containing monomers, epoxy group-containing monomers, (meth)acryloylmorpholine, vinyl ethers, and so on.

Examples of sulfonic acid group-containing monomers include styrene sulfonic acid, allyl sulfonic acid, 2-(meth)acrylamido-2- methylpropanesulfonic acid, (meth)acrylamidopropanesulfonic acid, sulfopropyl (meth)acrylate, (meth)acryloxynaphthalene sulfonic acid, sodium vinylsulfonate and the like.
Examples of phosphoric acid group-containing monomers include 2-hydroxyethyl acryloyl phosphate.
Examples of cyano group-containing monomers include acrylonitrile, methacrylonitrile and the like.
Examples of vinyl esters include vinyl acetate, vinyl propionate, vinyl laurate, and the like.
Examples of aromatic vinyl compounds include styrene, chlorostyrene, chloromethylstyrene, α-methylstyrene, other substituted styrenes, and the like.

Examples of carboxyl group-containing monomers include acrylic acid, methacrylic acid, carboxyethyl (meth)acrylate, carboxypentyl (meth)acrylate, itaconic acid, maleic acid, fumaric acid, crotonic acid, isocrotonic acid, and the like.
Examples of acid anhydride group-containing monomers include maleic anhydride, itaconic anhydride, acid anhydrides of the carboxyl group-containing monomers, and the like.
Examples of amide group-containing monomers include acrylamide, methacrylamide, diethylacrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropyl methacrylamide, diacetone acrylamide, and the like.
Examples of amino group-containing monomers include aminoethyl (meth)actylate, N,N-dimethylaminoethyl (meth)acrylate and N,N-dimethylaminapropyl (meth)acrylate.
Examples of imide group-containing monomers include cyclohexylmaleimide, isopropylmaleimide, N-cyclohexylmaleimide, itaconimide, and the like.
Examples of epoxy group-containing monomers include glycidyl (meth)acrylate, methylglycidyl (meth)acrylate, allyl glycidyl ether, and the like.
Examples of vinyl ethers include methyl vinyl ether, ethyl vinyl ether, isobutyl vinyl ether, and the like.

While among these "other monomers", one species can be used solely, or two or more species can be used in combination, their total content in the monomers used to synthesize the acrylic polymer is preferably about 40 % by mass or less (typically, 0.001 to 40 % by mass), and more preferably about 30 % by mass or less (typically, 0.001 to 30 % by mass). Also, the acrylic polymer may have a composition free of the other monomers (such as that obtained by using only a C₆₋₁₄ alkyl (meth)acrylate as the monomer, or that obtained by using only a C₆₋₁₄ alkyl (meth)acrylate and a hydroxyl group-containing (methacrylate).

When an emulsion polymerization method is employed for synthesis of the acrylic polymer and an acrylic monomer containing a carboxyl group or an acid anhydride group is used as the other monomer described above, the acrylic monomer containing a carboxyl group or an acid anhydride group can be used in an amount preferably in a range of 0.5 to 15 % by mass of all starting monomers (100 % by mass). An acrylic polymer having such a monomer composition may be preferable from the standpoint of the stable polymerization during synthesis of the acrylic polymer by an emulsion polymerization method, chronological stability, etc., of the adhesive strength in a surface protection film comprising a PSA layer that comprises the acrylic polymer.

When the acrylic polymer is synthesized by an emulsion polymerization method, examples of a preferable monomer composition include a composition comprising at least one monomer species among methyl methacrylate, isobornyl acrylate, N,N-diethylacrylamide and vinyl acetate. The amount of these monomers contained (i.e., the amount of methyl methacrylate, isobornyl acrylate, N,N-diethylacrylamide or vinyl acetate contained; if two or more species among these are contained, their total amount) can be, for instance, 0.5 to 15 % by mass of all starting monomers (100 % by mass), or more preferably 1 to 10 % by mass (e.g., 2 to 5 % by mass). For example, can be used a monomer composition comprising at least methyl methacrylate (e.g., a monomer composition comprising methyl methacrylate at 1 to 10 % by mass, or more preferably 2 to 5 % by mass of all starting monomers).

The method for obtaining an acrylic polymer having such a monomer composition is not particularly limited, and the polymer can be obtained by applying various polymerization methods generally used as methods for synthesizing acrylic polymers, such as solution polymerization methods, emulsion polymerization methods, bulk polymerization methods, suspension polymerization methods, and the like. In addition, the acrylic polymer may be a random copolymer, block copolymer, graft copolymer, or the like. From the standpoint of the productivity, etc., a random copolymer is usually preferable.

### < Polymerization initiator>

The initiator used in the polymerization can be suitably selected from known or commonly used polymerization initiators. For instance, an azo-based polymerization initiator can be preferably used. Examples of an azo-based polymerization initiator include 2,2'-azobisisobutyronitrile, 2,2'-azobis(2-methylpropionamidine) disulfate salt, 2,2'-azobis(2-amidinopropane) dihydrochloride, 2,2'-azobis[2-(5-methyl-2-imidazolin-2-yl)propane] dihydrochloride, 2,2'-azobis(N,N'-dimethylene isobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile),2,2'-azobis(2,4,4-trimethylpentane), dimethyl-2,2'-azobis(2-methylpropionate), and the like.

Other examples of a polymerization initiator include persulfate salts such as potassium persulfate, ammonium persulfate, etc.; peroxide-based initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxyxyclododecane, hydrogen peroxide, etc.; substituted-ethane-based initiators such as phenyl-substituted ethane, etc.; aromatic carbonyl compounds; and so on. Yet other examples of a polymerization initiator include redox-based initiators by combination of a peroxide and a reducing agent. Examples of such a redox-based initiator include combination of a peroxide and ascorbic acid (combination of hydrogen peroxide water and ascorbic acid, etc.), combination of a peroxide and an iron(II) salt (combination of hydrogen peroxide water and an iron(II) salt, etc.), combination of a persulfate salt and sodium hydrogen sulfite, and the like.

Among these polymerization initiators can be used solely as a single species or in combination of two or more species. The polymerization initiator can be used in a usual amount, which can be selected, for instance, from a range of about 0.005 to 1 part by mass (typically 0.01 to 1 part by mass) relative to 100 parts by mass of all starting monomers.

### <Solution polymerization>

In a preferable embodiment of the art disclosed herein, a solution polymerization method can be employed as a method for synthesizing the acrylic polymer. Such an embodiment may be advantageous from the standpoint of the transparency and the adhesive properties, etc., of the surface protection film. When solution polymerization is carried out, as the method for supplying the monomer, can be suitably employed an all-at-once method where all starting monomers are supplied at once, a continuous (dropwise) supply method, a portionwise (dropwise) supply method, or the like method. The polymerization temperature can be suitably selected in accordance with the monomer species, the type of solvent, the type of polymerization initiator, etc., to be used. For instance, it can be around 20 °C to 170 °C (typically 40 °C to 140 °C).

The solvent (polymerization solvent) used in solution polymerization can be suitably selected from known or commonly used organic solvents. For example, can be used one species or a mixture of two or more species selected from aromatic compounds (typically aromatic hydrocarbons) such as toluene, xylene, etc.; aliphatic or alicyclic hydrocarbons such as ethyl acetate, hexane, cyclohexane, methylcyclohexane, etc.; halogenated alkanes such as 1,2-dichloroethane, etc.; lower alcohols (e.g., monovalent alcohols having 1 to 4 carbon atoms) such as isopropanol, 1-butanol, sec-butanol, tert-butanol, etc.; ethers such as butyl methyl ether, etc.; ketones such as methyl ethyl ketone, acetyl acetone, etc.; and the like. A preferable organic solvent (which can be a mixed solvent) has a boiling point in a range of 20 °C to 200 °C (more preferably 25 °C to 150 °C) at a total pressure of one atmosphere.

According to such solution polymerization., can be obtained a polymerization reaction mixture in an embodiment where an acrylic polymer is dissolved in an organic solvent. As for the acrylic polymer in the art disclosed herein, can be preferably used the polymerization reaction mixture as is or after suitable work-up procedure. In typical, the solution containing an acrylic polymer is worked up and subsequently adjusted to a suitable viscosity (concentration) for use. Alternatively, the acrylic polymer can be synthesized by any other polymerization method (e.g., emulsion polymerization, photopolymerization, bulk polymerization, etc.) besides solution polymerization, and a solution of the polymer dissolved in an organic solvent can be used.

### <Emulsion polymerization>

In another preferable embodiment of the art disclosed herein, an emulsion polymerization, method can be employed as a method for synthesizing the acrylic polymer. Such an embodiment may be advantageous from the standpoint of reducing environmental stress related to production of the surface protection film, reducing the costs for equipment and management related to synthesis of the acrylic polymer, and so on. The embodiment of emulsion polymerization is not particularly limited. According to an embodiment similar to those of general emulsion polymerization heretofore known, for example, the emulsion polymerization can be carried out by suitably employing various known monomer supply methods, polymerization conditions (temperature, time length, pressure, etc.), materials (polymerization initiator, emulsifier, etc.) to be used. For example, as the monomer supply method, can be employed any of an all-at-once method where all starting monomers are supplied to a polymerization vessel at once, a continuous (dropwise) supply method, a portionwise (dropwise) supply method, and so on. Part or all of starting monomers can be mixed in water in advance to emulsify them, and the resulting emulsion (i.e., an emulsion of starting monomers) can be supplied to a reaction vessel. The polymerization temperature can be suitably selected in accordance with the monomer species, the type of polymerization initiator, and so on. For instance, it can be selected from a range above ambient temperature up to 100 °C (typically 40 °C to 100 °C, e.g., 40 °C to 80 °C).

### <Emulsifier>

In synthesis of an acrylic polymer by emulsion polymerization, an emulsifier is typically used. Such an emulsifier is not particularly limited, and a suitable emulsifier can be selected for use from various emulsifiers known or commonly used in the field of emulsion polymerization. For example, anionic emulsifiers, nonionic emulsifiers, and the like can be used. Examples of anionic emulsifiers include sodium lauryl sulfate, ammonium lauryl sulfate, sodium dodecyl benzene sulfonate, sodium polyoxyethylene lauryl sulfate, sodium polyoxyethylene alkyl ether sulfates, ammonium polyoxyethylene alkyl phenyl ether sulfates, sodium polyoxyethylene alkyl phenyl ether sulfates, sodium polyoxyethylene alkyl sulfosuccinates, and the like. Examples of nonionic emulsifiers include polyoxyethylene alkyl ethers, polyoxyethylene alkyl phenyl ethers, polyoxyethylene aliphatic acid esters, polyoxyethylene-polyoxypropylene block polymers, and the like. Alternatively, may be used a radically polymerizing emulsifer (or "reactive emulsifier" hereinafter) having a radically polymerizing functional group (reactive group) in its molecule.

The reactive emulsifier has at least one radically polymerizing functional group in the molecule (in a single molecule). The type of radically polymerizing functional group is not particularly limited, and it can be, for instance, vinyl group, propenyl group, isopropenyl group, vinyl ether group (vinyloxy group), allyl ether group (allyloxy group), or the like. With use of such a reactive emulsifier, contamination of the adherend can be prevented to a greater degree. From the standpoint of the polymerization stability, etc., it is usually preferable to use a reactive emulsifier having one radically polymerizing functional group in a single molecule.

Such a reactive emulsifier may have a structure of an anionic emulsifier (or an "anionic reactive emulsifier" hereinafter) having a radically polymerizing functional group introduced therein, a structure of a nonionic emulsifier (or a "nonionic reactive emulsifier" hereinafter) having a radically polymerizing functional group introduced therein, or the like. For example, can be used a reactive emulsifier having a structure of a nonionic hydrophilic group-containing anionic emulsifier (e.g., sodium polyoxyethylene alkyl ether sulfates, ammonium polyoxyethylene alkyl phenyl ether sulfates, sodium polyoxyethylene alkyl phenyl ether sulfates, sodium polyoxyethylene alkyl sulfosuccinate, etc.) that has a radically polymerizing functional group, such as a propenyl group or an allylether group, etc., introduced therein.

As such a reactive emulsifier, a commercially available product can be used as well. Examples of commercially available products include trade names "ADEKA REASOAP SE-10N", "ADEKA REASOAP SE-20N", "ADEKA REASOAP SR-10" and "ADEKA REASOAP SR-20" available from Adeka Corporation; trade names "AQUALON HS-10" and "AQUALON HS-05" available from Dai-ichi Kogyo Seiyaku Co., Ltd.; trade names "LATEMUL PD-104" available from Kao Corporation; and the like.

These emulsifiers (meaning to include both emulsifiers not having any radically polymerizing functional groups and reactive emulsifiers) can be suitably used solely as a single species or in combination. An emulsifier not having a radically polymerizing functional group and a reactive emulsifier can be used together at a suitable ratio. The amount of the emulsifier added relative to 100 parts by mass of all starting monomers can be, for instance, 0.1 to 10 parts by mass, and it is usually suitable to be about 0.5 to 5 parts by mass. According to such a usage, the stability of the emulsion and the properties (e.g., being less contaminating to adherends, chronological stability of the adhesive strength, etc.) of the surface protection film can be combined at a high level.

For the polymerization (emulsion polymerization, solution polymerization, etc.), can be used as necessary various chain transfer agents (which can be understood as molecular weight-adjusting agents, or polymerization degree-adjusting agents) heretofore known. The chain transfer agent may be, for instance, one, two or more species selected from mercaptans such as n-dodecyl mercaptan, t-dodecyl mercaptan, glycidyl mercaptan, 2-mercaptoethanol, and the like. Among these, n-dodecyl mercaptan and t-dodecyl mercaptan are preferable examples of the chain transfer agent. The chain transfer agent can be used in an amount of about 0.001 to 0.5 parts by mass relative to 100 parts by mass of all monomers combined. In a preferable embodiment, the chain transfer agent (e.g., n-dodecyl mercaptan) is used in an amount of, for instance, about 0.02 part by mass or greater (typically 0.02 to 0.1 part by mass, preferably 0.03 to 0.07 part by mass).

The acrylic polymer obtained by emulsion polymerization preferably has a solvent-insoluble content (the ratio of solvent-insoluble components; or "gel fraction" hereinafter) of 70 % by mass or greater in the entire acrylic polymer (100 % by mass). According to an acrylic polymer having such a gel fraction, even greater properties (e.g., being less contaminating to adherends, chronological stability of the adhesive strength, etc.) can be realized in a surface protection film comprising a PSA layer containing the said acrylic polymer. The gel fraction can be adjusted by modifying, for instance, the types and the amounts of materials (polymerization initiator, emulsifier, starting monomers, chain transfer agent, etc.) to be used, polymerization conditions (e.g., polymerization temperature), and so on. Although the upper limit of the gel fraction is not particularly limited, a preferable acrylic polymer usually has a gel fraction of 99 % by mass or smaller.

The acrylic polymer (regardless of the polymerization method) in the art disclosed herein has a weight average molecular weight (Mw) based on standard polystyrene in a range of preferably 10 × 10⁴ or larger, but 500 × 10⁴ or smaller, more preferably 20 × 10⁴ or larger, but 400 × 10⁴ or smaller, or even more preferably 30 × 10⁴ or larger, but 300 × 10⁴ or smaller.

Herein, Mw refers to a value based on standard polystyrene determined by GPC (gel permeation chromatography). More specifically, using a GPC system under trade name "HLC-8220 GPC" (available from Tosoh Corporation), it can be determined by a measurement carried out under the following conditions and calibration based on polystyrene:

### <GPC Measurement Conditions>

Sample concentration: 0.2 % by mass (THF solution)
Sample injection volume: 10 µL
Eluent: THF
Flow rate (flow speed): 0.6 mL/min
Column temperature (measurement temperature): 40 °C
Columns:
   Sample column: one piece of trade name "TSKguardcolumn SuperHZ-H" with two pieces of trade name "TSKgel SuperHZM-H" (available from Tosoh Corporation)
   Reference column: one piece of trade name "TSKgel SuperH-RC" (available from Tosoh Corporation)
Detector: differential refractometer (RI)

When the Mw value of the acrylic polymer is too small, the PSA may have insufficient cohesive strength, whereby PSA residue is likely to be left on the adherend surface. When the Mw value is too large, the PSA may exhibit poor fluidity, leading to likelihood of insufficient wettability (adhesion) to adherends. Such insufficient wettability may cause the surface protection film adhered on an adherend to peel off from the adherend while in use (e.g., unintentionally at a stage where the surface protection film is expected to continuously serve its protective function, unintentionally at a point where the surface protection film is still expected to provide protection). With respect to an acrylic polymer obtained by solution polymerization, it is particularly meaningful that the Mw value is in the preferable range given above.

### <Antistatic ingredient of PSA layer>

The surface protection film disclosed herein can be made preferably in an embodiment where the PSA layer comprises an antistatic ingredient. Examples of the antistatic ingredient include the materials listed earlier as antistatic ingredients allowable for inclusion in the top coat layer as well as ionic liquids, alkaline metal salts, and the like. Among these antistatic ingredients, one species can be used solely, or two or more species can be used in combination. In a preferable embodiment, the antistatic ingredient contained in the PSA layer comprises at least either an ionic liquid or an alkaline metal salt. Here, the term "ionic liquid" (or an ambient temperature molten salt) refers to an ionic compound that is present as a liquid at room temperature (25 °C).

### <Ionic liquid>

As the ionic liquid, can be used preferably one or more species among nitrogen-containing onium salts, sulfur-containing onium salts and phosphorous-containing onium salts. In a preferable embodiment, the PSA layer comprises an ionic liquid having at least one species of organic cation species represented by any of the following general formulas (A) to (E). According to such an ionic liquid, can be obtained a surface protection film having a particularly great antistatic property.

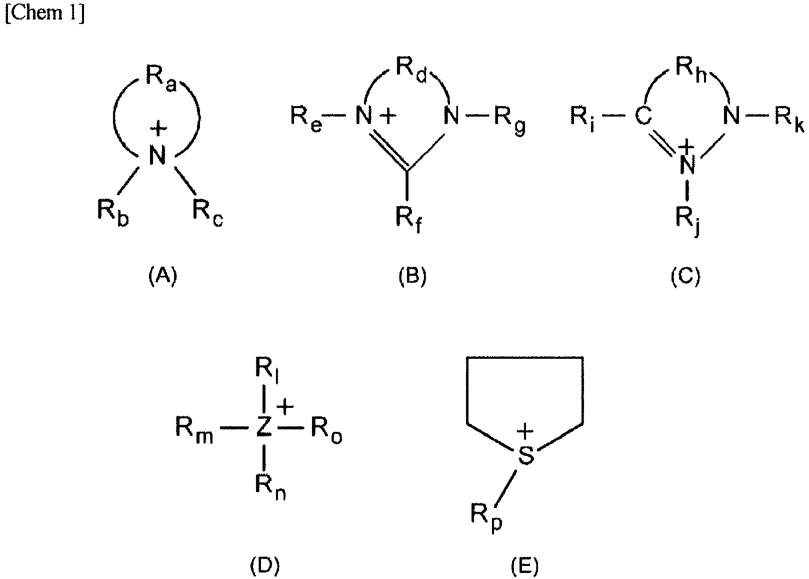

Here, in formula (A) above, Rₐ represents a hydrocarbon group having 4 to 20 carbon atoms, or a functional group containing a heteroatom. R_{b} and R_{c} may be the same or different, with each representing a hydrogen atom, a hydrocarbon group having 1 to 16 carbon atoms, or a functional group containing a heteroatom. However, R_{c} is not present in the case the nitrogen atom has a double bond.
In formula (B) above, R_{d} represents a hydrocarbon group having 2 to 20 carbon atoms, or a functional group containing a heteroatom. Rₑ, R_{f} and Rg may be the same or different, with each representing a hydrogen atom, a hydrocarbon group having 1 to 16 carbon atoms, or a functional group containing a heteroatom.
In formula (C) above, Rₕ represents a hydrocarbon group having 2 to 20 carbon atoms, or a functional group containing a heteroatom. Rᵢ, Rⱼ and Rₖ may be the same or different, with each representing a hydrogen atom, a hydrocarbon group having 1 to 16 carbon atoms, or a functional group containing a heteroatom.
In formula (D) above, Z represents a nitrogen atom, a sulfur atom or a phosphorous atom. Rₗ, Rₘ, Rₙ and Rₒ may be the same or different, with each representing a hydrocarbon group having 1 to 20 carbon atoms, or a functional group containing a heteroatom. However, Rₒ is not present in the case Z is a sulfur atom.
In formula (E) above, Rₚ represents a hydrocarbon group having 1 to 18 carbon atoms, or a functional group containing a heteroatom.

Examples of cations represented by formula (A) include a pyridinium cation, pyrrolidinium cation, piperidinium cation, cations having a pyrroline backbone, cations having a pyrrole backbone, and the like.

Specific examples of pyridinium cations include 1-methylpyridinium, 1-ethylpyridinium, 1-propylpyridinium, 1-butylpyridinium, 1-pentylpyridinium, 1-hexylpyridinium, 1-heptylpyridinium, 1-octylpyridinium, 1-nonylpyridinium, 1-decylpyridinium, 1-allylpyridinium, 1-propyl-2-methylpyridinium, 1-butyl-2-methylpyridinium, 1-pentyl-2-methylpyridinium, 1-hexyl-2-methylpyridinium, 1-heptyl-2-methylpyridinium, 1-octyl-2-methylpyridinium, 1-nonyl-2-methylpyridinium, 1-decyl-2-methylpyridinium, 1-propyl-3-methylpyridinium, 1-butyl-3-methylpyridinium, 1-butyl-4-methylpyridinium, 1-pentyl-3-methylpyridinium, 1-hexyl-3-methylpyridinium, 1-heptyl-3-methylpyridinium, 1-octyl-3-methylpyridinium, 1-octyl-4-methylpyridinium, 1-nonyl-3-methylpyridinium, 1-decyl-3-methylpyridinium, 1-propyl-4-methylpyridinium, 1-pentyl-4-methylpyridinium, 1-hexyl-4-methylpyridinium, 1-heptyl-4-methylpyridinium, 1-nonyl-4-methylpyridinium, 1-decyl-4-methylpyridinium, 1-butyl-3,4-dimethylpyridinium, and the like.

Specific examples of pyrrolidinium cations include 1,1-dimethylpyrrolidinium, 1-ethyl-1-methylpyrrolidinium, 1-methyl-1-propylpyrrolidinium, 1-methyl-1-butylpyrrolidinium, 1-methyl-1-pentylpyrrolidinium, 1-methyl-1-hexylpyrrolidinium, 1-methyl-1-heptylpyrrolidinium, 1-methyl-1-octylpyrrolidinium, 1-methyl-1-nonylpyrrolidinium, 1-methyl-1-decylpyrrolidinium, 1-methyl-1-methoxyethoxypyrrolidinium, 1-ethyl-1-propylpyrrolidinium, 1-ethyl-1-butylpyrrolidinium, 1-ethyl-1-pentylpyrrolidinium, 1-ethyl-1-hexylpyrrolidinium, 1-ethyl-1-heptylpyrrolidinium, 1,1-dipropylpyrrolidinium, 1-propyl-1-butylpyrrolidinium, 1,1-dibutylpyrrolidinium, pyrrolidinium-2-one, and the like.

Specific examples of piperidinium cations include 1-propylpiperidinium, 1-pentylpiperidinium, 1,1-dimethylpiperidinium, 1-methyl-1-ethylpiperidinium, 1-methyl-1-propylpiperidinium, 1-methyl-1-butylpiperidinium, 1-methyl-1-pentylpiperidinium, 1-methyl-1-hexylpiperidinium, 1-methyl-1-heptylpiperidinium, 1-methyl-1-octylpiperidinium, 1-methyl-1-decylpiperidinium, 1-methyl-1-methoxyethoxyethylpiperidinium, 1-ethyl-1-propylpiperidinium, I-ethyl-1-butylpiperidinium, 1-ethyl-1-pentylpiperidinium, 1-ethyl-1-hexylpiperidinium, 1-ethyl-1-heptylpiperidinium, 1,1-dipropylpiperidinium, 1-propyl-1-butylpiperidinium, 1-propyl-1-pentylpiperidinium, 1-propyl-1-hexylpiperidinium, 1-propyl-1-heptylpiperidinium, 1,1-dibutylpiperidinium, 1-butyl-1-pentylpiperidinium, 1-butyl-1-hexylpiperidinium, 1-butyl-1-heptylpiperidinium, and the like.

Specific examples of cations having a pyrroline backbone include 2-methyl-1-pyrroline and the like. Specific examples of cations having a pyrrole backbone include 1-ethyl-2-phenylindole, 1,2-dimethylindole, 1-ethylcarbazole, and the like.

Examples of cations represented by formula (B) include imidazolium cations, tetrahydropyrimidinium cations, dihydropyrimidinium cations, and the like.

Specific examples of imidazolium cations include 1,3-dimethylimidazolium, 1,3-diethylimidazolium, 1-methyl-3-ethylimidazolium, 1-methyl-3-hexylimidazolium, 1-ethyl-3-methylimidazolium, 1-propyl-3-methylimidazolium, 1-butyl-3-methylimidazolium, 1-pentyl-3-methylimidazolium, 1-hexyl-3-methylimidazolium, 1-heptyl-3-methylimidazolium, 1-octyl-3-methylimidazolium, 1-nonyl-3-methylimidazolium, 1-decyl-3-methylimidazolium, 1-dodecyl-3-methylimidazolium, 1-tetradecyl-3-methylimidazolium, 1-hexadecyl-3-methylimidazolium, 1-octadecyl-3-methylimidazolium, 1,2-dimethyl-3-propylimidazolium, 1-ethyl-2,3-dimethylimidazolium, 1-butyl-2,3-dimethylimidazolium, 1-hexyl-2,3-dimethylimidazolium, 1-(2-methoxyethyl)-3-methylimidazolium, and the like.

Specific examples of tetrahydropyrimidinium cations include 1,3-dimethyl-1,4,5,6-tetrahydropyrimidinium, 1,2,3-trimethyl-1,4,5,6-tetrahydropyrimidinium, 1,2,3,4-tetramethyl-1,4,5,6-tetrahydropyrimidinium, 1,2,3,5-tetramethyl-1,4,5,6-tetrahydropyrimidinium, and the like.

Specific examples of dihydropyrimidinium cations include 1,3-dimethyl-1,4-dihydropyrimidinium, 1,3-dimethyl-1,6-dihydropyrimidinium, 1,2,3-trimethyl-1,4-dihydropyrimidinium, 1,2,3-trimethyl-1,6-dihydropyrimidinium, 1,2,3,4-tetramethyl-1,4-dihydropyrimidinium, 1,2,3,4-tetramethyl-1,6-dihydropyrimidinium, and the like.

Examples of cations represented by formula (C) include pyrazolium cations, pyrazolinium cations, and the like.

Specific examples pyrazolium cations include 1-methylpyrazolium, 3-methylpyrazolium, 1-ethyl-2,3,5-trimethylpyrazolium, 1-propyl-2,3,5-trimethylpyrazolium, 1-butyl-2,3,5-trimethylpyrazolium, 1-(2-methoxyethyl)pyrazolium, and the like. Specific examples of pyrazolinium cations include 1-ethyl-2-methylpyrazolinium and the like.

Examples of cations represented by formula (D) include a cation in which Rₗ, Rₘ, Rₙ and Rₒ may be the same or different, with each being an alkyl group having 1 to 20 carbon atoms. Examples of such a cation include tetraalkylammonium cations, trialkylsulfonium cations and tetraalkylphosphonium cations. Other examples of cations represented by formula (D) include those with some of the alkyl groups including a substituent such as an alkenyl group, an alkoxy group and/or an epoxy group. In addition, one, two or more of Rₗ, Rₘ, Rₙ and Rₒ may also contain an aromatic ring or an aliphatic ring.

The cation represented by formula (D) may have a symmetrical structure or an asymmetrical structure. Examples of ammonium cation having a symmetrical structure include tetraalkylammonium cations in which Rₗ, Rₘ, Rₙ and Rₒ are the same alkyl group (such as any of methyl group, ethyl group, propyl group, butyl group, pentyl group, hexyl group, heptyl group, octyl group, nonyl group, decyl group, dodecyl group, hexadecyl group or octadecyl group).

Typical examples of asymmetrical ammonium cations include a tetraalkylammonium cation in which three of Rₗ, Rₘ, Rₙ and Rₒ are the same while the remaining group is different, with specific examples thereof including asymmetrical tetraalkyl ammonium cations such as trimethylethylammonium, trimethylpropylammonium, trimethylbutylammonium, trimethylpentylammonium, trimethylhexylammonium, trimethylheptylammonium, trimethyloctylammonium, trimethylnonylammonium, trimethyldecylammonium, triethylmethylammonium, triethylpropylammonium, triethylbutylammonium, triethylpentylammonium, triethylhexylammonium, triethylheptylammonium, triethyloctylammonium, triethylnonylammonium, triethyldecylammonium, tripropylmethylammonium, tripropylethylammonium, tripropylbutylammonium, tripropylpentylammonium, tripropylhexylammonium, tripropylheptylammonium, tripropyloctylammonium, tripropylnonylammonium, tripropyldecylammonium, tributylmethylammonium, tributylethylammonium, tributylpropylammonium, tributylpentylammonium, tributylhexylammonium, tributylheptylammonium, tripentylmethylammonium, tripentylethylammonium, tripentylpropylammonium, tripentylbutylammonium, tripentylhexylammonium, tripentylheptylammonium, trihexylmethylammonium, trihexylethylammonium, trihexylpropylammonium, trihexylbutylammonium, trihexylpentylammonium, trihexylheptylammonium, triheptylmethylammonium, triheptylethylammonium, triheptylpropylammonium, triheptylbutylammonium, triheptylpentylammonium, triheptylhexylammonium, triocylmethylammonium, triocylethylammonium, trioctylpropylammonium, trioctylbutylammonium, trioctylpentylammonium, trioctylhexylammonium, trioctylheptylammonium, trioctyldodecylammonium, trioctylhexadecylammonium, trioctyloctadecylammonium, trinonylmethylammonium, tridecylmethylammonium, and the like.

Other examples of asymmetrical ammonium cations include tetraalkylammonium cations such as dimethyldiethylammonium, dimethyldipropylammonium, dimethyldibutylammonium, dimethyldipentylammonium, dimethyldihexylammonium, dimethyldiheptylammonium, dimethyldioctylammonium, dimethyldinonylammonium, dimethyldidecylammonium, dipropyldiethylammonium, dipropyldibutylammonium, dipropyldipentylammonium, dipropyldihexylammonium, dimethylethylpropylammonium, dimethylethylbutylammonium, dimethylethylpentylammonium, dimethylethylhexylammonium, dimethylethylheptylammonium, dimethylethylnonylammonium, dimethylpropylbutylammonium, dimethylpropylpentylammonium, dimethylpropylhexylammonium, dimethylpropylheptylammonium, dimethylbutylhexylammonium, dimethylbutylheptylammonium, dimethylpentylhexylammonium, dimethylhexylheptylammonium, diethylmethylpropylammonium, diethylmethylpentylammonium, diethylmethylheptylammonium, diethylpropylpentylammonium, dipropylmethylethylammonium, dipropylmethylpentylammonium, dipropylbutylhexylammonium, dibutylmethylpentylammonium, dibutylmethylhexylammonium, methylethylpropylbutylammonium, methylethylpropylpentylammonium, methylethylpropylhexylammonium, etc.; ammonium cations containing a cycloalkyl group such as trimethylcyclohexylammonium, etc.; ammonium cations containing an alkenyl group such as diallyldimethylammonium, diallyldipropylammonium, diallylmethylhexylammonium, diallylmethyloctylammonium, etc.; ammonium cations containing an alkoxy group such as triethyl(methoxyethoxyethyl)ammonium, dimethylethyl(methoxyethoxyethyl)ammonium, dimethylethyl(ethoxyethoxyethyl)ammonium, diethylmethyl(2-methoxyethyl)ammonium, diethylmethyl(methoxyethoxyethyl)ammonium, etc.; ammonium cations containing an epoxy group such as glycidyltrimethylammonium, etc.; and the like.

Examples of sulfonium cations having a symmetrical structure include trialkylsulfonium cations in which Rₗ, Rₘ, and Rₙ are the same alkyl group (such as any of methyl group, ethyl group, propyl group, butyl group and hexyl group). Examples of asymmetrical sulfonium cations include asymmetrical trialkylsulfonium cations such as dimethyldecylsulfonium, diethylmethylsulfonium, dibutylethylsulfonium, and the like.

Examples ofphosphonium cations having a symmetrical structure include tetraalkylphosphonium cations in which Rₗ, Rₘ, Rₙ and Rₒ represent the same alkyl group (such as any of a methyl group, ethyl group, butyl group, pentyl group, hexyl group, heptyl group, octyl group, nonyl group and decyl group). Examples of asymmetrical phosphonium cations include a tetraalkylphosphonium cation in which three of Rₗ, Rₘ, Rₙ and Rₒ are the same while the remaining group is different, with specific examples thereof including trimethylpentylphosphonium, trimethylhexylphosphonium, trimethylheptylphosphonium, trimethyloctylphosphonium, trimethylnonylphosphonium, trimethyldecylphosphoniu.m, triethylmethylphosphonium, tributylethylphosphonium, tributyl-(2-methoxyethyl)phosphonium, tripentylmethylphosphonium, trihexylmethylphosphonium, triheptylmethylphosphonium, trioctylmethylphosphonium, trinonylmethylphosphonium and tridecylmethylphosphonium. Other examples of asymmetrical phosphonium cations include asymmetrical tetraalkylphosphonium cations such as trihexyltetradecylphosphonium, dimethyldipentylphosphonium, dimethyldihexylphosphonium, dimethyldiheptylphosphonium, dimethyldioctylphosphonium, dimethyldinonylphosphonium and dimethyldidecylphosphonium, and phosphonium cations containing an alkoxy group such as trimethyl(methoxyethoxyethyl)phosphonium, dimethylethyl(methoxyethoxyethyl)phosphonium, and the like.

Preferable examples of the cation represented by formula (D) include asymmetrical tetraalkylammonium cations, asymmetrical trialkylsulfonium cations and asymmetrical tetraalkylphosphonium cations such as those listed above.

Examples of the cation represented by formula (E) include sulfonium cations in which Rₚ is an alkyl group having I to 18 carbon atoms. Specific examples of Rₚ include a methyl group, ethyl group, propyl group, butyl group, hexyl group, octyl group, nonyl group, decyl group, dodecyl group, tridecyl group, tetradecyl group, octadecyl group, and the like.

The anion species of the ionic liquid is not particularly limited, and can be any anion capable of forming an ionic liquid as a salt with any of the cations disclosed herein. Specific examples include Cl⁻, Br⁻, I⁻, AlCl₄⁻, Al₂Cl₇⁻, BF₄⁻, PF₆⁻, ClO₄⁻, NO₃⁻, CH₃COO⁻, CF₃COO⁻, CH₃SO₃⁻, CF₃SO₃⁻; (FSO₂)₂N⁻, (CF₃SO₂)₂N⁻, (CF₃SO₂)₃C⁻, AsF₆⁻, SbF₆⁻, NbF₆⁻, TaF₆⁻, F(HF)ₙ⁻, (CN)₂N⁻, C₄F₉SO₃⁻, (C₂F₅SO₂)₂N⁻, C₃F₇COO⁻, (CF₃SO₂)(CF₃CO)N⁻, C₉H₁₉COO⁻, (CH₃)₂PO₄⁻, (C₂H₅)₂PO₄⁻, C₂H₅OSO₃⁻, C₆H₁₃OSO₃⁻, C₈H₁₇OSO₃⁻, CH₃(OC₂H₄)₂OSO₃⁻, C₆H₄(CH₃)SO₃⁻, (C₂F₅)₃PF₃⁻, CH₃CH(OH)COO⁻ and anions represented by the following formula (F).

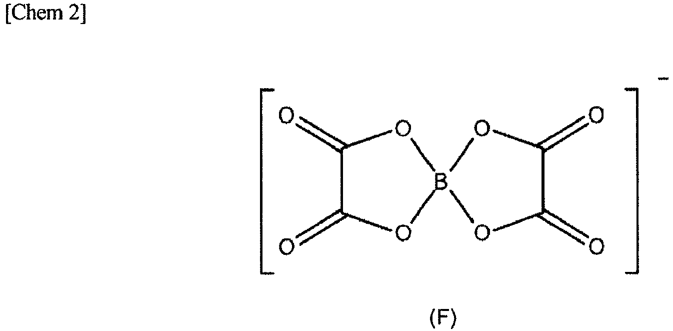

In particular, a hydrophobic anion species is less likely to bleed to the PSA surface, and is used preferably from the viewpoint of the less likelihood of causing contamination. In addition, an anion species containing a fluorine atom (such as an anion species containing a perfluoroalkyl group) is used preferably from the viewpoint of obtaining an ionic compound having a low melting point. Preferable examples of such an anion species include fluorine-containing anions such as bis(perfluoroalkylsulfonyl)imide anions (e.g., (CF₃SO₂)₂N⁻, (C₂F₅SO₂)₂N⁻), perfluoroalkylsulfonium anions (e.g., CF₃SO₃⁻), and the like. In usual, the number of carbon atoms in the perfluoroalkyl group is preferably 1 to 3 and particularly preferably 1 or 2.

The ionic liquid used in the art disclosed herein can be a suitable combination of the above-mentioned cation species and anion species. For example, in the case the cation species is a pyridinium cation, specific examples of combinations with the above-mentioned anion species include 1-butylpyridinium tetrafluoroborate, 1-butylpyridinium hexafluorophosphate, 1-butyl-3-methylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate, 1-allylpyridinium bis(trifluoromethanesulfonyl)imide, and the like. Similarly, with respect to each of the other cations listed above, can be used an ionic liquid thereof in a combination with an anion species disclosed herein.

For the ionic liquid, a commercially available product can be used. Alternatively, an ionic liquid can be easily synthesized according to a known method. There are no particular limitations on the method used to synthesize the ionic liquid as long as it allows production of the target ionic liquid. In general, can be employed a halogenation method, hydroxylation method, acid ester method, complex formation method, neutralization method or the like such as those described in the known literature, "Ionic Liquids - Front Line of Development and Future Outlook" (CMC Publishing Co., Ltd.).

In usual, the amount of the ionic liquid is within the range of suitably 0.03 to 3 parts by mass relative to 100 parts by mass of the acrylic polymer, preferably 0.05 to 2.5 parts by mass, or more preferably 0.1 to 2 parts by mass. If the amount of the ionic liquid used is excessively low, adequate antistatic properties are unable to be obtained, while if the amount is excessively high, the adherend tends to be contaminated easily.

### <Alkaline metal salt>

Typical examples of an alkaline metal salt that can be used as the antistatic ingredient for the PSA layer include lithium salts, sodium salts and potassium salts. For example, can be used a metal salt comprising Li⁺, Na⁺ or K⁺ as the cation species and Cl⁻, Br⁻, I⁻, BF₄⁻, PF₆⁻, SCN⁻, ClO₄⁻, CF₃SO₃⁻, (FSO₂)₂N⁻, (CF₃SO₂)₂N⁻, (C₂F₅SO₂)₂N⁻ or (CF₃SO₂)₃C⁻ as the anion species. The use of a lithium salt is preferable because of its high dissociation. Preferable specific examples of lithium salts include LiBr, LiI, LiBF₄, LiPF₆, LiSCN, LiClO₄, LiCF₃SO₃, Li(CF₃SO₂)₂N, Li(C₂F₅SO₂)₂N, Li(CF₃SO₂)₃C, and the like. A lithium salt containing, as its anion species, a fluorine-containing anion such as bis(perfluoroalkylsulfonyl)imide anion or perfluoroalkylsulfonium anion (such as Li(CF₃SO₂)₂N, Li(C₂F₅SO₂)₂N, or LiCF₃SO₃), etc., is particularly preferable. Among these alkaline metal salts, one species may be used alone, or two or more species may be used in combination.

In usual, the amount of the alkaline metal salt (e.g., a lithium salt) relative to 100 parts by mass of the acrylic polymer is suitably less than 1 part by mass, preferably 0.01 to 0.8 parts by mass, more preferably 0.01 to 0.5 parts by mass, or even more preferably 0.02 to 0.3 parts by mass (e.g., 0.05 to 0.2 parts by mass). If the amount of the alkaline metal salt is excessively low, there may be cases in which adequate antistaticity cannot be obtained. On the other hand, if the amount of the alkaline metal salt is excessively high, contamination of the adherend tends to occur easily.

### <Alkylene oxide compound>

The art disclosed herein can be practiced preferably in an embodiment where the PSA layer comprises an alkylene oxide compound. A PSA layer comprising an alkylene oxide compound may exhibit even better removability. Such a PSA layer may be less likely to absorb moisture even when stored in a highly humid environment, and may become less susceptible to clouding due to absorption of moisture. When the PSA layer turns cloudy, the visual inspectability (e.g., the ability of the surface protection film to make the adherend surface visible for visual inspection through itself) of a surface protection film comprising the PSA layer may be reduced. Thus, a surface protection film in the embodiment less susceptible to clouding is particularly useful as a surface protection film for optical components.

The alkylene oxide chain may be contained in the acrylic polymer as an alkylene oxide chain-containing monomer copolymerized therein. Alternatively, it can be contained as an alkylene oxide compound added to the acrylic polymer (i.e., not copolymerized in the acrylic polymer). The art disclosed herein can be practiced preferably in an embodiment where, for instance, the PSA layer comprises an antistatic ingredient (preferably one or each of an ionic liquid and an alkaline metal salt) as well as an alkylene oxide chain.

As the alkylene oxide chain-containing monomer, can be used an alkylene oxide compound having in a molecule an oxyalkylene residue (alkylene oxide chain) and a functional group (acryloyl group, methacryloyl group, allyl group, vinyl group, etc.) capable of copolymerizing with an acrylic monomer. Here, the scope of "alkylene oxide compound" encompasses both an alkylene oxide compound having one oxyalkylene residue as well as an alkylene oxide compound having two or more consecutive oxyalkylene residues (i.e., the number of sequential oxyalkylene residues is two or more). The alkylene group contained in the oxyalkylene residue has, for instance, 1 to 6 carbon atoms. The alkylene group may be a straight chain or a branched chain. Preferable examples include oxymethylene group, oxyethylene group, oxypropylene group, oxybutylene group and the like.

In a preferable embodiment, the alkylene oxide chain-containing monomer has an ethylene oxide chain. The monomer may comprise an ethylene oxide chain as a portion of its alkylene oxide chain. With use of an acrylic polymer in which such a monomer is copolymerized as the base polymer, the miscibility between the base polymer and the antistatic ingredient may increase and the bleeding to the adherend may be suppressed, whereby a less-contaminating PSA composition can be obtained.

The alkylene oxide chain-containing monomer comprises an average of preferably 1 to 50, or more preferably 2 to 40 moles of oxyalkylene residues added (as the number of sequential residues). By copolymerizing an alkylene oxide chain-containing monomer with an average of one mole or more of sequential oxyalkylene residues, the removability can be effectively increased. The terminal hydroxyl group of the oxyalkylene chain may remain unreacted, or may have been substituted with a different functional group or the like.

Specific examples of a monomer having a (meth)acryloyl group and an alkylene oxide chain in a molecule thereof include polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxy polyethylene glycol (meth)acrylate, ethoxy polyethylene glycol (meth)acrylate, butoxy polyethylene glycol (meth)acrylate, octoxy polyethylene glycol (meth)acrylate, lauroxy polyethylene glycol (meth)acrylate, stearoxy polyethylene glycol (meth)acrylate, phenoxy polyethylene glycol (meth)acrylate, methoxy polypropylene glycol (meth)acrylate, octoxy polyethylene glycol-polypropylene glycol (meth)acrylate, and the like.

Such an alkylene oxide chain-containing monomer may be a so-called reactive surfactant. Examples of a reactive surfactant containing an alkylene oxide chain include anionic reactive surfactants, nonionic reactive surfactants and cationic reactive surfactants, etc., having the polymerizable functional group (acryloyl group, methacryloyl group, allyl group, vinyl group, etc.) and an alkylene oxide chain in a molecule thereof. The reactive surfactant containing an alkylene oxide chain may be a reactive emulsifier described earlier. In other words, the reactive emulsifiers described earlier can be seen as alkylene oxide chain-containing monomers. Such a reactive emulsifier may be present in the PSA layer as a result of use as an emulsifier in emulsion polymerization to synthesize the acrylic polymer, or as a monomer copolymerized along with other starting monomers in synthesis of the acrylic polymer by a different polymerization method (e.g., a solution polymerization method) other than emulsion polymerization.

Specific examples of commercially available products that can be used as the alkylene oxide chain-containing monomer disclosed herein include the commercially available reactive emulsifiers listed above as well as trade names "BLENMER PME-400", "BLENMER PME-1000" and "BLENMER 50POEP-800B" available from NOF Corporation; trade names "LATEMUL PD-420", "LATEMUL PD-430", "EMULGEN 120" and "EMULGEN A-90" available from Kao Corporation; and trade names "ADEKA REASOAP ER-10" and "ADEKA REASOAP NE-10" available from Adeka Corporation; trade name "NEWCOL 1008" available from Nippon Nyukazai Co., Ltd.; trade name "NOIGEN XL-100" available from Dai-ichi Kogyo Seiyaku Co, Ltd.; and the like.

Among the alkylene oxide chain-containing monomer, one species can be used solely, or two or more species can be used in combination. Their overall amount used is preferably 40 % by mass or less, more preferably 30 % by mass or less and even more preferably 20 % by mass or less of the total amount of monomers used to synthesize the acrylic polymer.

As the alkylene oxide compounds added to the acrylic polymer, can be used, for instance, various species of alkylene oxide compound in which the alkylene group contained in the oxyalkylene residue has I to 6 (preferably 1 to 4, or more preferably 2 to 4, e.g., 2 to 3) carbon atoms. The alkylene group can be a straight chain or a branched chain. The average number of moles of oxyalkylene residues added (the number of sequential residues) is preferably 1 to 50 and more preferably 1 to 40.

Specific examples of alkylene oxide compounds include polyoxyalkylene polyols; nonionic surfactants such as polyoxyalkylene alkyl amines, polyoxyalkylene diamines, polyoxyalkylene fatty acid esters, polyoxyalkylene sorbitan fatty acid esters, polyoxyalkylene alkyl phenyl ethers, polyoxyalkylene alkyl ethers (with preferable examples including polyoxyethylene alkyl ethers), polyoxyalkylene alkyl allyl ethers, polyoxyalkylene alkyl phenyl allyl ethers, etc.; anionic surfactants such as polyoxyalkylene alkyl ether sulfate ester salts, polyoxyalkylene alkyl ether phosphate ester salts, polyoxyalkylene alkyl phenyl ether sulfate ester salts, polyoxyalkylene alkyl phenyl ether phosphate ester salts, etc.; as well as cationic surfactants and zwitterionic surfactants having a polyalkylene oxide chain, polyether esters and derivatives thereof having a polyalkylene oxide chain, polyoxyalkylene-modified silicone, and the like. In addition, the alkylene oxide chain-containing monomer may also be added to the acrylic polymer as an alkylene oxide chain-containing compound. Among such alkylene oxide chain-containing compounds, one species may be used alone, or two or more species may be used in combination.

Preferable examples of the alkylene oxide compound that can be used in the art disclosed herein include polyoxyalkylene polyols such as polyethylene glycol (PEG), polypropylene glycol (PPG), a compound having an oxypropyelene residue and an oxyethyelne residue (these residues may form a random sequence or a block sequence), and the like. Can be also used an alkylene oxide compound having any molecular structure among the diol, triol, hexaol, and similar structures. For example, can be preferably used a polyoxyalkylene diol. Specific examples of a compound containing an oxypropylene residue and an oxyethylene residue include PPG-PEG block copolymers, PPG-PEG-PPG block copolymers, PEG-PPG-PEG block copolymers, and the like. Other preferable examples include derivatives of polyoxyalkylene polyols. For example, can be used a terminally etherified polyoxyalkylene polyol (a PPG monoalkyl ether, PEG-PPG monoalkyl ether, etc.), or a terminally acetylated polyoxyalkylene polyol (a terminally acetylated PPG, etc.).

In a preferable embodiment, the alkylene oxide compound has an ethylene oxide chain in at least a portion thereof. Mixing of such a compound (ethylene oxide chain-containing compound) increases the miscibility between the base polymer and the antistatic ingredient, whereby a less-contaminating PSA composition can be obtained with preferably suppressed bleeding thereof to the adherend. In the ethylene oxide chain-containing compound, the ethylene oxide chain preferably accounts for 5 to 85 % by mass, more preferably 5 to 80 % by mass, and even more preferably 5 to 75 % by mass of the entire compound.

The alkylene oxide compound suitably has a number average molecular weight (Mn) of 10000 or less, and in usual, a preferable alkylene oxide compound has a Mn value of 200 to 5000. If the Mn value is too far above 10000, the miscibility to the acrylic polymer decreases with likelihood to form a turbid PSA layer. If the Mn is too far below 200, contamination by the alkylene oxide compound may be likely to occur. Here, Mn refers to a number average molecular weight with respect to all alkylene oxide compounds contained in a PSA composition. The Mn refers to a value based on standard polystyrene determined by GPC. More specifically, using a GPC measurement device under trade name "HLC-8220 GPC" (available from Tosoh Corporation), it can be determined by a measurement carried out under the following conditions and calibration based on polystyrene:

### <GPC measurement conditions>

Sample concentration: 0.2 % by mass (THF solution)
Sample injection volume: 10 µL
Eluent: THF
Flow rate (flow speed): 0.6 mL/min
Column temperature (measurement temperature): 40 °C
Columns:
   Sample column: one piece of trade name "TSKguardcolumn SuperHZ-H" with two pieces of trade name "TSKgel SuperHZM-H" (available from Tosoh Corporation)
   Reference column: one piece of trade name "TSKgel SuperH-RC" (available from Tosoh Corporation)
Detector: differential refractometer (RI)

When the PSA layer in the art disclosed herein comprises the alkylene oxide compound, the amount thereof can be, for example, 0.01 to 40 parts by mass relative to 100 parts by mass of the acrylic polymer, preferably 0.05 to 30 parts by mass, or more preferably 0.1 to 20 parts by mass. The amount of the alkylene oxide compound added can be 0.1 to 10 parts by mass, or even 0.1 to 5 parts by mass (e.g., 0.1 to 1 parts by mass). If the amount is excessively low, the effect by the addition thereof declines, while if the amount is excessively high, contamination by the alkylene oxide compound may be likely to occur.

The art disclosed herein can be practiced preferably in an embodiment using, as the alkylene oxide compound, a single species or a mixture of two or more species of compound represented by the following formula (a):

R^{a}O-(PO)ₗ-(EO)ₘ-(PO)ₙ-R^{b} (a)

In the present description, PO represents an oxypropylene group -CH₂CH(CH₃)O-, EO represents an oxyethylene group -CH₂CH₂O-.

In the formula (a), each of R^{a} and R^{b} represents an alkyl group (which can be a straight chain or a branched chain) or a hydrogen atom. R^{a} and R^{b} can be the same or different from each other. Preferable examples of the alkyl group include alkyl groups (typically straight chain alkyl groups) having 1 to 4 carbon atoms, such as methyl group, ethyl group, propyl group, butyl group and the like. In a preferable embodiment of the art disclosed herein, can be preferably used an alkylene oxide compound with each of R^{a} and R^{b} being a hydrogen atom.
In the formula (a), each of l and n is a positive number (typically an integer of l or larger). Each of l and n is in a range of preferably 1 to 100, or more preferably 10 to 50 (e.g., 10 to 30). The values of l and n can be the same or different from each other. In the formula (a), m is a positive number (typically an integer of l or larger), preferably 1 to 50, or more preferably 1 to 30 (e.g., 1 to 15).

In the formula (a), the adduct (copolymer) of EO and PO forms a block. In other words, the compound represented by the formula (a) is a triblock copolymer having a block (e.g., a PPG block) consisting of PO on each side of a block (e.g., a PEG block) consisting of EO, or a derivative thereof.

With respect to an alkylene oxide compound (or "compound (a)" hereinafter) represented by the formula (a), while the ratio of the total mass of EO to the total mass of the compound (a) ([total mass of EO]/[total mass of compound (a)] × 100) (unit: % by mass) is not particularly limited, it is preferably 50 % by mass or less, more preferably 5 to 50 % by mass, or even more preferably 10 to 30 % by mass. A PSA composition containing a compound (a) at such a ratio may exhibit greater leveling ability (self leveling). A highly self-leveling PSA layer is advantageous from the standpoint of the adhesive properties and visual properties of the surface protection film. It is noted that "the total mass of compound (a)" refers to "the combined mass of all the compound (a) contained in a PSA composition" while "the total mass of EO" refers to "the combined mass of EO contained in all the compound (a) in a PSA composition". "The ratio of the total mass of EO to the total mass of compound (a)" may be referred to as "the ethylene oxide content" or "the EO content". Examples of a method for measuring the EO content include nuclear magnetic resonance (NMR), and chromatography or time-of-flight secondary ion mass spectrometry (TOF-SIMS).

Although the Mn value of the compound (a) is not particularly limited, it is preferably 1200 to 4000, or more preferably 1500 to 3000. A compound (a) having a Mn value in these ranges will have good miscibility to acrylic polymers. Thus, a surface protection film comprising a PSA layer that contains such a compound (a) may have good visual quality in the PSA layer and may also exhibit good removability.

The number average molecular weight (Mn) herein refers to the number average molecular weight with respect to all the compound (a) contained in a PSA composition. The number average molecular weight (Mn) refers to a value based on standard polystyrene obtained by a GPC measurement.

The compound (a) can be obtained by, for instance, allowing a fatty acid or a higher alcohol to react with ethylene oxide and propylene oxide. It is obtainable also by allowing ethylene glycol to react with propylene glycol.

As the compound (a), a commercially available product can be used as well. Specific examples of such a commercially available product include trade names "ADEKA PLURONIC 25R-1", "ADEKA PLURONIC 25R-2", "ADEKA PLURONIC 17R-2", "ADEKA PLURONIC 17R-3" available from Adeka Corporation; a series of products under trade name "PLURONIC RPE" available from BASF Japan, Ltd.; poly(ethylene glycol) block-poly(propylene glycol) block-poly(ethylene glycol) available from Sigma-Aldrich Co., LLC; and the like.

When the PSA layer in the art disclosed herein contains a compound (a), its amount can be, for instance, 0.01 to 3.0 parts by mass relative to 100 parts by mass of the acrylic polymer, and in usual, it is suitably 0.01 to 2.0 parts by mass, preferably 0.02 to 1.5 parts by mass, or more preferably 0.02 to 1.0 part by mass (e.g., 0.1 to 0.5 part by mass). According to a compound (a) used in such an amount, can be obtained a surface protection film that has a PSA layer having good visual quality while being highly anti-contaminating to adherends.

When preparing a PSA composition (typically a solvent-based or water-dispersed PSA composition) containing a compound (a), it is preferable to use the compound (a) by itself without use of a solvent (e.g., the compound (a) is added to a solution or a dispersion containing an acrylic polymer). Alternatively, for a purpose of increasing the efficiency of its addition, or like purposes, can be used a solution or a dispersion of the compound (a) in a suitable solvent. For example, in preparation of a water-dispersed PSA composition, it is preferable to employ such an embodiment where the compound (a) is used as a dispersion or a solution in a suitable solvent. Examples of the solvent include organic solvents such as 2-ethylhexanol, butyl cellosolve, dipropylene glycol, ethylene glycol, propylene glycol, normal propanol, isopropanol and the like.

### <PSA composition>

In the art disclosed herein, the form of the PSA composition used for forming a PSA layer is not particularly limited. For example, it can be a solvent-based PSA composition containing adhesive components in an organic solvent, a water-dispersed PSA composition (typically, an aqueous emulsion-based PSA composition) containing adhesive components dispersed in an aqueous solvent, an aqueous solution-based PSA composition containing adhesive components dissolved in water, a solvent-free PSA composition (e.g., a PSA composition curable by irradiation of activating energy rays such as ultraviolet rays or electron beam, etc., a hot-melt PSA composition), or the like. In a preferable embodiment of the surface protection film disclosed herein, the surface protection film comprises a PSA layer formed from a solvent-based PSA composition. The organic solvent contained in the solvent-based PSA composition can be, for instance, an absolute solvent consisting of one of toluene, xylene, ethyl acetate, hexane, cyclohexane, methylcyclohexane, heptane and isopropanol, or a mixed solvent comprising one of these as the primary component. In another preferable embodiment, the surface protection film comprises a PSA layer formed from a water-dispersed PSA composition.

In the art disclosed herein, as the PSA composition (preferably a solvent-based or a water-dispersed PSA composition) used for forming a PSA layer, can be preferably utilized a PSA composition constituted so that the acrylic polymer contained in the composition can be suitably crosslinked. As a specific crosslinking means, can be preferably employed a method comprising: introducing crosslinking sites into the acrylic polymer by copolymerizing a monomer having a suitable functional group (a hydroxyl group, carboxyl group, etc.) and adding to the acrylic polymer a compound (crosslinking agent) capable of reacting with that functional group to form a crosslink. As the crosslinking agent, can be used various types of material used for crosslinking of general acrylic polymers, such as an isocyanate compound, an epoxy compound, a melamine-based compound, an aziridine compound, or the like. Among these crosslinking agents, one species may be used alone, or two or more types may be used in combination.

As the crosslinking agent, it is particularly preferable to use an isocyanate compound since it the peel strength relative to the adherend can be readily adjusted to a suitable range. Examples of such an isocyanate compound include aromatic isocyanates such as tolylene diisocyanate, xylylene diisocyanate, etc.; alicyclic isocyanates such as isophorone diisocyanate, etc.; aliphatic isocyanates such as hexamethylene diisocyanate, etc.; and the like. More specific examples include lower aliphatic polyisocyanates such as butylene diisocyanate, hexamethylene diisocyanate, etc.; alicyclic isocyanates such as cyclopentylene diisocyanate, cyclohexylene diisocyanate, isophorone diisocyanate, etc.; aromatic diisocyanates such as 2,4-tolylene diisocyanate, 4,4'-diphenylmethane diisocyanate, xylylene diisocyanate, etc.; isocyanate adducts such as trimethylolpropane/tolylene diisocyanate trimer adduct (trade name "CORONATE L" available from Nippon Polyurethane Industry Co., Ltd.), trimethylolpropane/hexamethylene diisocayante trimer adduct (trade name "CORONATE HL" available from Nippon Polyurethane Industry Co., Ltd.), an isocyanurate of hexamethylene diisocyanate (trade name "CORONATE HX" available from Nippon Polyurethane Industry Co., Ltd.), etc.; and the like. Among these isocyanate compounds, one species may be used alone, or two or more types may be used in combination.

In addition, examples of epoxy compounds used as crosslinking agents include N,N,N',N'-tetraglycidyl-m-xylene diamine (trade name "TETRAD-X" available from Mitsubishi Gas Chemical Inc.), 1,3-bis(N,N-diglycidylaminomethyl)cyclohexane (trade name "TETRAD-C" available from Mitsubishi Gas Chemical Inc.), and the like. Examples of melamine-based resins include hexamethylol melamine and the like. Examples of commercially available aziridine derivatives include products of under trade names "HDU", "TAZM" and "TAZO" available from Sogo Pharmaceutical Co., Ltd.

The amount of crosslinking agent used can be suitably selected according to the composition and the structure (molecular weight, etc.) of the acrylic polymer or the manner of use, etc., of the surface protection film. Normally, the amount of crosslinking agent used relative to 100 parts by mass of the acrylic polymer is suitably about 0.01 to 15 parts by mass, preferably about 0.1 to 10 parts by mass (e.g., about 0.2 to 5 parts by mass). If the amount of crosslinking agent is excessively low, the cohesive strength of the PSA may turn out insufficient. whereby residual adhesive may be likely to remain on the adherend. On the other hand, if the amount of crosslinking agent used is excessively high, the PSA may exhibit too high a cohesive strength with lower fluidity, whereby the wettability to the adherend may turn out insufficient, causing a peel.

### <Acetylene diol compound>

The PSA layer in the art disclosed herein may comprise an acetylene diol compound. A PSA composition having a composition containing the acetylene diol compound may be self-leveling to a greater degree. A highly self-leveling PSA layer is advantageous from the standpoint of the adhesive properties and visual properties (e.g., the ability of the surface protection film to make the adherend surface visible for visual inspection through itself) of the surface protection film. When an emulsion-based PSA composition is used to form the PSA layer, the acetylene diol compound content is particularly meaningful because an emulsion-based PSA generally tends to be less self-leveling as compared to a solvent-based PSA composition.

Here, the term "acetylene diol compound" refers to a diol having an acetylene bond in the molecule. The acetylene diol compound can be, for instance, a compound represented by the formula (b1) shown below or a compound represented by the formula (b2) shown below, etc., while not to be limited to these. Hereinafter, an acetylene diol compound represented by the formula (b 1) may be referred to as "compound (b1)" while an acetylene diol compound represented by the formula (b2) may be referred to as "compound (b2)".

As the acetylene diol compound, for instance, can be preferably used a compound represented by the formula (b1).

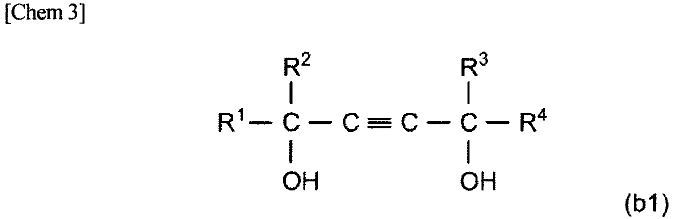

In the formula (b1), each of R¹,R², R³ and R⁴ represents an organic group having 1 to 20 carbon atoms. The organic group may be a hydrocarbon group, or a heteroatom-containing organic group (typically, an organic group containing carbon atom(s), hydrogen atom(s), and a heteroatom (an oxygen atom, a nitrogen atom, a sulfur atom, etc.)). R¹, R², R³ and R⁴ may be the same or different from each other.

In the formula (b1), each of R¹, R², R³ and R⁴ may have either an acyclic structure (which can be a straight chain or a branched chain) or a cyclic structure. In usual, can be preferably used a compound (b1) wherein each of R¹, R², R³ and R⁴ is an acyclic organic group (e.g., a saturated or an unsaturated acyclic hydrocarbon group). Each of R¹ and R⁴ is preferably an alkyl group having 2 to 10 carbon atoms. For instance, each of these is preferably an acyclic alkyl group (n-butyl group, sec-butyl group, tert-butyl group, or isobutyl group) having four carbon atoms. Each of R² and R³ is preferably an alkyl group having one to four carbon atoms. For instance, each of these is preferably an alkyl group having one or two carbon atom(s) (i.e., a methyl group or an ethyl group).

Specific examples of the acetylene diol compound (compound (b1)) represented by the formula (b1) include 7,10-dimethyl-8-hexadecene-7,10-diol, 4,7-dimethyl-5-decene-4,7-diol, 2,4,7,9-tetramethyl-5-decene-4,7-diol, 3,6-dimethyl-4-octene-3,6-diol, and the like.

As the acetylene diol compound represented by the formula (b1), a commercially available product can be used. Specific examples of such a commercially available product include products under the trade name of "SURFYNOL 104" series available from Air Products and Chemicals, Inc. More specific examples include "SURFYNOL 104E", "SURFYNOL 104H", "SURFYNOL 104A", "SURFYNOL 104BC", "SURFYNOL 104DPM", "SURFYNOL 104PA", "SURFYNOL 104PG-50" and the like.

Alternatively, as the acetylene diol compound, can be preferably used, for example, a compound represented by the formula (b2) shown below.

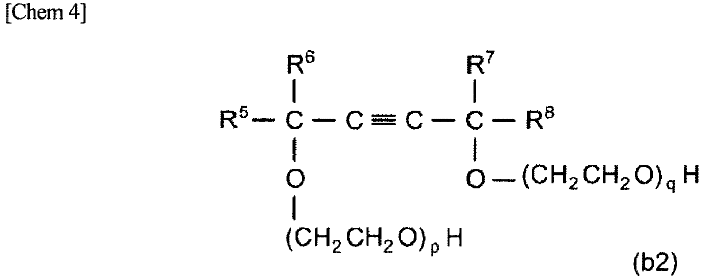

In the formula (b2), each of R⁵, R⁶, R⁷ and R⁸ represents an organic group having 1 to 20 carbon atoms. The organic group may be a hydrocarbon group, or a heteroatom-containing organic group (typically, an organic group containing carbon atom(s), hydrogen atom(s), and a heteroatom (an oxygen atom, a nitrogen atom, a sulfur atom, etc.)), R⁵, R⁶, R⁷ and R⁸ may be the same or different from each other. In the formula (b2), each of p and q is an integer equal to or larger than zero, with their sum (p + q) being equal to or larger than 1. When p is zero, the group represented by -O-(CH₂CH₂O)ₚH is a hydroxyl group (-OH), and the same applies to q as well.
In a preferable compound (b2), p + q is 1 to 20, or more preferably I to 9. The numbers for p and q may be the same or different from each other. The numbers for p and q are preferably adjusted so that the compound (b2) will have a HLB (hydrophile-lipophile balance) value smaller than 13.

In the formula (b2), each of R⁵, R⁶, R⁷ and R⁸ may have either an acyclic structure (which can be a straight chain or a branched chain) or a cyclic structure. In usual, can be preferably used a compound (b2) wherein each of R⁵, R⁶, R⁷ and R⁸ is an acyclic organic group (e.g., a saturated or an unsaturated acyclic hydrocarbon group). Each of R⁵ and R⁸ is preferably an alkyl group having 2 to 10 carbon atoms. For instance, each of these is preferably an acyclic alkyl group (n-butyl group, sec-butyl group, tert-butyl group, or isobutyl group) having four carbon atoms. Each of R⁶ and R⁷ is preferably an alkyl group having one to four carbon atoms. For instance, each of these is preferably an alkyl group having one or two carbon atom(s) (i.e., a methyl group or an ethyl group).

Specific examples of the acetylene diol compound (compound (b2)) represented by the formula (b2) include an ethylene oxide adduct of 7,10-dimethyl-8-hexadecene-7,10-diol, ethylene oxide adduct of 4,7-dimethyl-5-decene-4,7-diol, ethylene oxide adduct of 2,4,7,9-tetramethyl-5-decene-4,7-diol, ethylene oxide adduct of 3,6-dimethyl-4-octene-3,6-diol, and the like.

In the formula (b2), p and q are preferably selected so that the compound (b2) will have an HLB value smaller than 13. For example, when the acetylene diol compound represented by the formula (b2) is an ethylene oxide adduct of 2,4,7,9-tetramethyl-5-decene-4,7-diol, the sum of p and q, p + q, is preferably 9 or smaller.

As the acetylene diol compound represented by the formula (b2), a commercially available product can be used. Specific examples of such a commercially available product include products under the trade name of "SURFYNOL 400" series available from Air Products and Chemicals, Inc. More specific examples include "SURFYNOL 420", "SURFYNOL 440", and the like.

When preparing a PSA composition (typically a solvent-based or a water-dispersed PSA composition) containing an acetylene diol compound (which may be a compound (b1), a compound (b2), or any other acetylene diol compound), it is preferable to use the acetylene diol compound by itself without use of a solvent (e.g., the acetylene diol compound is added to a solution or a dispersion containing an acrylic polymer). Alternatively, for a purpose of increasing the efficiency of its addition or like purposes, can be used a solution or a dispersion of the acetylene diol compound in a suitable solvent. For example, in preparation of a water-dispersed PSA composition, it is preferable to employ such an embodiment where the acetylene diol compound is used as a dispersion or a solution thereof in a suitable solvent. Examples of the solvent include organic solvents such as 2-ethylhexanol, butyl cellosolve, dipropylene glycol, ethylene glycol, propylene glycol, normal propanol, isopropanol and the like. Among these solvents, from the standpoint of the dispersibility in water, ethylene glycol and propylene glycol can be preferably used. When the acetylene diol compound is added as a dispersion or a solution thereof, it is preferable that the solvent content in the dispersion or the solution (100 % by mass) is less than 40 % by mass (e.g., 15 to 35 % by mass) for ethylene glycol as the solvent, or less than 70 % by mass (e.g., 20 to 60 % by mass) for propylene glycol as the solvent.

A preferable acetylene diol compound (which may be a compound (b1), a compound (b2), or any other acetylene diol compound) has, for instance, an HLB value (or simply "HLB" hereinafter) smaller than 13. An acetylene diol compound having such HLB is preferable because it is highly anti-contaminating to adherends. From such a standpoint, a more preferable acetylene diol compound has HLB of 1 to 10, or more preferably 3 to 8 (e.g., 3 to 5).

Herein, the HLB value refers to a hydrophile-lipophile balance according to Griffin, which indicates the degrees of hydrophilicity and lipophilicity of a surfactant. The definition of the HLB value can be found in J. SOC. Cosmetic Chemists,1, 311 (1949) by W. C. Griffin, "Handbook of Surfactants" 3rd ed., by Etsutami Takahashi, Yoshiro Namba, Motoo Koike, and Masao Kobayashi, Kogaku Tosho K. K., November 25, 1972, pp. 179-182, or the like.

Among these acetylene diol compounds, can be used one species solely, or a mixture of two or more species. The acetylene diol compound can be used in an amount (when two or more species are used, their combined amount) of 0.01 to 10 parts by mass relative to 100 parts by mass of the acrylic polymer, preferably 0. 1 to 7 parts by mass, or more preferably 0.5 to 5 parts by mass. According to the acetylene diol compound used in such an amount, can be obtained a surface protection film combining high levels of visual quality in the PSA layer and anti-contaminating properties to adherends in a good balance.

The PSA composition may further contain various conventionally known additives as necessary. Examples of such additives include surface lubricants, leveling agents, antioxidants, preservatives, photostabilizing agents, ultraviolet(UV)-ray absorbing agents, polymerization inhibitors, silane coupling agents, and the like. Can be also added a tackifier resin known and/or commonly used in a PSA composition comprising an acrylic polymer as the base polymer.

### <Method for forming PSA layer>

The PSA layer in the art disclosed herein can be preferably formed, for instance, by a method (direct method) where a PSA composition as described above is directly applied to the second face of a substrate film and allowed to dry or cure. Alternatively, it can be formed by another method (transfer method) where a PSA composition is applied to a surface (release face) of a release liner and allowed to dry or cure to form a PSA layer on the surface, and this PSA layer is adhered and transferred to a substrate film. From the standpoint of anchoring of the PSA layer, usually, the direct method is preferably employed. When applying (typically, coating of) the PSA composition, can be suitably employed various methods conventionally known in the field of surface protection films, such as roll coating, gravure roll coating, reverse roll coating, roll brushing, spray coating, air knife coating, die coating, and the like. Drying of the PSA composition can be carried out with heating as necessary (such as by heating to about 60 °C to 150°C). As for the means to cure the PSA layer, can be suitably employed UV rays, laser rays, α-rays, β-rays, γ-rays, X-rays and an electron beam. Although there are no particular limitations, the thickness of the PSA layer can be, for example, about 3 µm to 100 µm, and it is usually preferable to be about 5 µm to 50 µm (e.g., about 10 µm to 30 µm).

The surface protection film disclosed herein may be provided in a form where a release liner is adhered to the adhesive face (i.e., in a form of a surface protection film having a release liner), as necessary, for protecting the adhesive face (to be adhered to an adherend). For the substrate constituting the release liner, can be used a paper, a synthetic resin film, or the like. Because of the evenly smooth surface, a synthetic resin film can be used preferably. For instance, as the substrate of the release liner, can be preferably used various resin films (e.g., polyester films). The thickness of the release liner may be, for instance, about 5 µm to 200 µm, and it is usually preferable to be about 10 µm to 100 µm. Of the release liner, the face to be adhered to a PSA layer may have been subjected to a release treatment or anti-contamination treatment using a conventional release agent (e.g., a silicone-based, a fluorine-based, long-chain alkyl-based, aliphatic acid amide-based, etc.) or silica gel powder, etc.

### <Properties of surface protection film>

The surface protection film according to a preferable embodiment exhibits antistatic properties that give rise to a peeling electrostatic voltage within ± 1 kV (more preferably within ± 0.8 kV, or even more preferably within ± 0.7 kV) for both the adherend (polarizing plate) side and the surface protection film side, when measured in an environment at 23 °C and 50 % RH. The surface protection film according to a more preferable embodiment exhibits antistatic properties such that it has a peeling electrostatic voltage within ± 1 kV (more preferably within ± 0.8 kV, or even more preferably within ± 0.7 kV) when measured in an environment at 23°C and 25 % RH (environment at a low humidity). It is preferable that the surface protection film has a peeling electrostatic voltage within ± 0.1 kV at least on the surface protection film side under each of the 50 % RH and 25 % RH measurement conditions.

The surface protection film disclosed herein can be made also in an embodiment further comprising other layer(s) in addition to a substrate, a top coat layer and a PSA layer. Such "other layer(s)" can be placed, for instance, between the first face (back face) of the substrate and the top coat layer, or between the second face (front face) of the substrate and the PSA layer, etc. The layer placed between the substrate's back face and the top coat layer may be, for example, a layer (an antistatic layer) containing an antistatic ingredient. The layer placed between the substrate's front face and the PSA layer may be, for example, a primer layer (an anchoring layer) to increase the anchoring of the PSA layer to the second face, an antistatic layer, or the like. The surface protection film may be constituted such that an antistatic layer is placed on the substrate's front face, an anchoring layer is placed on the antistatic layer, and a PSA layer is placed on the anchoring layer.

In a preferable embodiment of the art disclosed herein, for example, as shown in Fig. 1, top coat layer 14 is directly provided to the back face 12A of substrate 12. In other words, no other layers (e.g., an antistatic layer) are present between the substrate's back face 12A and top coat layer 14. According to such an embodiment, as compared to an embodiment where another layer is present between the substrate's back face 12A and top coat layer 14, the adhesion between the substrate's back face 12A and top coat layer 14 may be further increased. Thus, a surface protection film with higher scratch resistance is likely to be obtained.

The surface protection film disclosed herein can be used (removed from an adherend's surface) preferably, for instance, as shown in Fig. 3, in an embodiment comprising: adhering PSA tape 60 to back face 1A (the surface oftop coat layer 14) of surface protection film 1, and lifting up (picking up) at least part of surface protection film 1 from the surface of adherend 50 by pulling the film by the PSA tape (pick-up tape) 60. As pick-up tape 60, can be preferably used a tape constituted as a single-faced PSA tape comprising a substrate 64 (preferably a resin film) and a PSA layer 62 provided on a face thereof. The type of PSA constituting PSA layer 62 is not particularly limited. For instance, PSA layer 62 may comprise one, two or more species selected from various known PSAs that are acrylic, polyester-based, urethane-based, polyether-based, rubber-based, silicone-based, polyamide-based, fluorine-based, or the like. PSA layer 62 may have a thickness of, for instance, about 3 µm to 100 µm, with about 5 µm to 50 µm (e.g., about 10 µm to 30 µm) being usually preferable.

Here, if the adhesive strength (or "back-face peel strength" hereinafter) of pick-up tape 60 relative to the back face 1A of surface protection film 1 largely varies depending on the type of PSA constituting the PSA layer 62, the latitude in selecting a pick-up tape 60 may become narrower. Such variations in the back-face peel strength may confuse a worker removing surface protection film 1 from adherend 50 by pick-up tape 60, thereby possibly decreasing the work efficiently or increasing the workload. On the other hand, due to the availability and the costs, a typical pick-up tape comprises an acrylic PSA layer formed of an acrylic PSA, or a rubber-based PSA layer formed of a rubber-based PSA. Thus, a preferable surface protection film has a back face to which these two typical pick-up tape species exhibit relatively similar back-face adhesive strength values. The top coat layer according to the art disclosed herein comprises a wax ester as a slip agent. A top coat layer having such a composition is preferable as the back face of surface protection film 1, because, for instance, as compared to a top coat layer having a composition containing a silicone-based slip agent in place of the wax ester, it causes the back-face peel strength of a pick-up tape to be varied only to a smaller extent according to the type of PSA in the pick-up tape (i.e., the back-face peel strength tends to be less dependent on the pick-up tape PSA).

The substrate of the pick-up tape is not particularly limited as far as it exhibits strength and flexibility suitable for the pick-up operation. For example, a resin film similar to those for the substrate of the surface protection film can be used preferably. Other examples include rubber sheets formed of natural rubber, a butyl rubber, etc.; foam sheets formed by foaming polyurethane, polychloropurene rubber, polyethylene, etc.; papers such as Kraft paper, crepe paper, Washi, etc.; fabrics such as cotton fabric, staple fiber fabric, etc.; non-woven fabrics such as cellulose-based non-woven fabrics, polyester non-woven fabrics, vinylon non-woven fabrics, etc.; metal sheets such as aluminum sheets, copper sheets, etc.; composites of these; and the like. The thickness of the substrate in the pick-up tape can be suitably selected in accordance with the purpose. In general, it is about 10 µm to 500 µm (typically 10 µm to 200 µm).

When Fa (N/20mm) is the back-face peel strength of an acrylic pick-up tape (e.g., trade name "No. 31B" available from Nitto Denko Corporation) having an acrylic PSA layer relative to a surface protection film, and Fr (N/20mm) is the back-face peel strength of a rubber-based pick-up tape (e.g., trade name "CELLOTAPE®" available from Nichiban Co., Ltd.) having a rubber-based PSA layer relative to the surface protection film, a surface protection film according to a preferable embodiment yields |Fa - Fr| of 1.5 (N/20mm) or smaller, more preferably 1.2 (N/20mm) or smaller, for instance, 1.0 (N/20mm) or smaller. A surface protection film having such properties allows the back-face peel strength to be less dependent on the pick-up tape PSA. Thus, it is preferable for the good workability during the pick-up operation.

The back-face peel strength can be determined by a measurement in an environment at 23 °C and 50 % RH, with the measurement being carried out by adhering a pick-up tape to the back face of a surface protection film, storing the resultant for 30 minutes, and subsequently measuring the peel strength while peeling back the pick-up tape from the back face at a peel rate of 0.3 m/min and a peel angle of 180°. As in the worked examples described later, when the pick-up tape used for the measurement has a width W1 (mm) not equal to 20 mm, the peel strength can be multiplied by 20/W1 to be converted to the peel strength per 20 mm width. It is usually preferable to measure the back-face peel strength with a pick-up tape having a width of 10 mm to 30 mm (e.g., 15 mm to 25 mm).

Each of the back-face peel strength values Fa and Fr is preferably 3.0 N/20mm or greater, or more preferably 4.0 N/20mm or greater (e.g., 5.0 N/20mm or greater). When the back-face peel strength is too low, the surface protection film cannot be picked up from the adherend's surface, and the pick-up tape may be peeled off from the back face of the surface protection film. The upper limit of the back-face peel strength is not particularly limited. It is usually suitable that each of Fa and Fr is 20 N/20mm or less (e.g., 10 N/20mm or less).

When (Fa,Fr)ₘᵢₙ (N/20mm) is the smaller value between the back-face peel strength values Fa and Fr relative to a surface protection film, and Fp (N/25mm) is the peel strength of the surface protection film determined by: pressure-bonding the surface protection film to an adherend (typically a polarizing plate, e.g., the same polarizing plate as used in the worked examples described later), leaving the resultant for 30 minutes, and subsequently measuring the peel strength while peeling back the surface protection film from the adherend at a peel rate of 0.3 m/min and a peel angle of 180°; a surface protection film according to a preferable embodiment satisfies the inequality (Fa,Fr)ₘᵢₙ/Fp ≥ 5. When (Fa,Fr)_{min/}Fp is too small, the surface protection film cannot be picked up from the adherend's surface, and the pick-up tape may be peeled off from the back face of the surface protection film. In order to perform the pick-up operation even more efficiently, (Fa,Fr)ₘᵢₙ/Fp is preferably 8 or larger (more preferably 1.0 or larger, even more preferably 25 or larger, e.g., 50 or larger). Although the upper limit of (Fa,Fr)ₘᵢₙ/Fp is not particularly limited, it is usually suitable to be 200 or smaller.
The peel strength Fp (N/25mm) can be determined by a measurement in an environment at 23 °C and 50 % RH, with the measurement being carried out by adhering to an adherend (e.g., a plain polarizing plate) the adhesive face of a long surface protection film strip (specimen) of a suitable width, leaving the resultant for 30 minutes, and subsequently measuring the peel strength while peeling back the film away from the adherend at a peel rate of 0.3 m/min and a peel angle of 180°. When the specimen has a width W2 (mm) not equal to 25 mm, the peel strength can be multiplied by 25/W2 to be converted to the peel strength per 25 mm width. It is usually preferable to measure the peel strength Fp using a specimen having a width of 10 mm to 30 mm (e.g., 20 mm to 30 mm).

The disclosures of the present description include the following matters:
(1) A top-coated substrate comprising
   a substrate having a first face and a second face, and
   a top coat layer provided on the first face of the substrate, wherein
   the top coat layer comprises a wax as a slip agent and a polyester resin as a binder, with the wax being an ester of a higher fatty acid and a higher alcohol.
(2) The top-coated substrate according to (1) above, wherein the wax has a melting point of 50 °C or above, but 100°C or below.
(3) The top-coated substrate according to (1) or (2) above comprising, as the wax, a compound represented by the next formula (W):

   X-COO-Y (W)

   wherein each of X and Y can be independently selected from hydrocarbon groups having 10 to 40 carbon atoms (more preferably 10 to 35, even more preferably 14 to 35, for instance, 20 to 32.
(4) The top-coated substrate according to any one of (1) to (3) above, wherein the binder comprises a saturated polyester resin.
(5) The top-coated substrate according to any one of (1) to (4) above, wherein the substrate is a transparent polyester resin film.
(6) The top-coated substrate according to any one of (1) to (5) above, wherein the top coat layer comprises a conductive polymer as an antistatic ingredient.
(7) The top-coated substrate according to any one of (1) to (6) above, wherein the top coat layer is directly formed on top of the first face of the substrate.

(8) A method for producing the top-coated substrate according to any one of (1) to (7) above, with the method comprising:
   obtaining a coating mixture comprising an aqueous medium, the binder, and the wax, and
   applying the coating mixture to the first face (back face) of the substrate.
(9) A surface protection film comprising the top-coated substrate according to any one of (1) to (7) above, and a PSA layer provided on the second face of the substrate.
(10) The surface protection film according to (8) or (9) above, wherein the PSA layer comprises an acrylic PSA.
(11) The surface protection film according to any one of (8) to (10) above, wherein the PSA layer comprises, as an antistatic ingredient, one or each of an ionic liquid and an alkaline metal salt.
(12) The surface protection film according to any one of (8) to (11) above that is used as adhered to a surface of an optical component.
(13) A method for protecting a surface of an adherend, with the method comprising:
   adhering the surface protection film according to any one of (8) to (11) above to the surface of the adherend,
   adhering a PSA tape (a pick-up tape) to the back face (opposite to the face adhered to the surface of the adherend) of the surface protection film, and
   lifting up at least part of the surface protection film adhered to the adherend by pulling the film by the PSA tape.

### EXAMPLES

Several experimental examples relating to the present invention are described below, although these specific examples are not intended to limit the scope of the invention. In the description that follows, unless noted otherwise, all references to "parts" and "%" are based on mass. The respective properties described below were measured or evaluated as follows.

### 1. Measurement of thickness of top coat layer

With respect to the surface protection film according to each example, after a heavy-metal staining process followed by resin embedding, by the ultrathin slice plastination technique, a cross-sectional image was obtained at an accelerating voltage of 100 kV and a magnification of × 60,000 employing TEM system under model number "H-7650" available from Hitachi, Ltd. After the cross-sectional image was binarized, the area of the cross section was divided by the sample length in the viewing field to determine the actual thickness (average thickness in the viewing field) of the top coat layer.

### 2. Clouding resistance test

Cloudiness of the top coat layer surface was evaluated by visually observing the comparison between the top coat layer surface (which can be turned cloudy) and a transparent part where at least the top coat layer surface was removed. The transparent part may be a part where whole of the top coat layer was removed.
In detail, a test operator once rubbed the back face (the top coat layer surface) of the surface protection film according to each example with his gloved hand to remove at least the top coat layer surface, and relative difference in transparency/cloudiness between the rubbed regions (where the top coat layer surface was removed) and the surroundings (non-rubbed regions where the top coat layer surface was not removed) was visually inspected. As a result, when any difference was visually observed in the transparency among the rubbed regions and the non-rubbed regions, it was judged to have cloudiness. When the cloudiness (of the non-rubbed regions of the top coat layer) becomes significant, a stronger contrast between the transparent rubbed regions and the cloudy surroundings (cloudy non-rubbed regions) appears.
Visual inspections were carried out in a dark room (reflection method, transmission method) and in a light room as follows.
(a) Inspection by a reflection method in a dark room: in a room (dark room) blocked from outside light, a 100 W fluorescent light (product name "RUPICALINE" available from Mitsubishi Electric Corporation) was positioned at 100 cm from the back face (the top coat layer surface) of the surface protection film according to each example, and the back face of the sample was visually inspected from different viewpoints.
(b) Inspection by a transmission method in a dark room: in the dark room, the fluorescent light was positioned at 10 cm from the front face (opposite to the top coat side) of the surface protection film, and the back face of the sample was visually inspected from different viewpoints.
(c) Inspection in a light room: in a room (light room) having windows for admission of outside light, the back face of the sample was visually inspected near a window without no direct sunlight during daylight.
The results of inspections under these three different conditions were graded into the following five levels:
0: No clouding was observed by the inspection under any condition (no differences were found in the transparency among the scrubbed regions and the unscrubbed regions).
1: Slight clouding was observed by the inspection according to the reflection method in the dark room.
2: Slight cloudiness was observed by the inspection according to the transmission method in the dark room.
3: Slight clouding was observed by the inspection in the light room.
4: Definite clouding was observed by the inspection in the light room.
The clouding resistance test was performed on each surface protection film at an initial stage (after stored at 50 °C and 15 % RH for three days following the fabrication) and after a storage under a hot/wet condition (after stored at 50 °C and 15 % RH for three days and further stored in a hot/wet environment at 60 °C and 95 % RH for two weeks).

### 3. Solvent resistance test

In the dark room, the back face (i.e., the top coat layer surface) of the surface protection film according to each example was wiped five times with a cleaning cloth (fabric) wet with ethanol, and the appearance of the back face was visually inspected. As a result, when no visual changes were observed between the regions wiped with ethanol and the other regions (when no visual changes were found after the wiping with ethanol), the solvent resistance was rated "good"; and when wiping streaks were observed, the solvent resistance was rated "poor".

### 4. Measurement of back-face peel strength

### 4-1. Peel strength difference depending on the PSA of pick-up tape (PSA dependence)

As shown in Fig. 4, surface protection film 1 according to each example was cut to a size of 70 mm wide by 100 mm long. The adhesive face 20 A (on the PSA-layer side) of the surface protection film 1 was fixed onto a SUS304 stainless steel plate 132 with double-faced PSA tape 130.
Single-faced PSA tape (pick-up tape) G 1 (trade name "No. 31 B" available from Nitto Denko Corporation, 19 mm wide) having acrylic PSA 162 on top of a polyester film (substrate) 164 was cut to 100 mm long. Adhesive face 162A of this PSA tape 160 was pressure-bonded to the back face 1A (i.e., the surface of top coat layer 14) of surface protection film 1 at a pressure of 0.25 MPa and a rate of 0.3 m/min. This was left at 23°C and 50 % RH for 30 minutes. Subsequently, using a universal tensile tester, PSA tape 160 was peeled back from the back face 1A of surface protection film 1 at a peel rate of 0.3 m/min and a peel angle of 180°, and the back-face peel strength (N/19mm) was measured at the same time.
In place of the PSA tape GI, using a single-faced tape (pick-up tape) G2 (trade name "CELLOTAPE®" available from Nichiban Co., Ltd., 24 mm wide) having a natural rubber-based PSA on top of a cellophane film (substrate), the back-face peel strength (N/24mm) was measured in the same manner.
From these values, were determined Fa (N/20mm) as the peel strength per 20 mm width of PSA tape G 1 (i.e., the value obtained by multiplying the peel strength in N/19mm by 20/19), and Fr (N/20mm) as the peel strength per 20 mm width of PSA tape G2 (i.e., the value obtained by multiplying the peel strength in N/24mm by 20/24). Tables 1 to 3 show these Fa and Fr values.
In addition, from these back-face peel strength values, the strength difference |Fa - Fr| was determined. When the value was 1.5 (N/20mm) or smaller, the workability of the surface protection film was graded as "Good", and when the value was larger than 1.5 (N/20mm), the workability was graded as "Poor". The |Fa - Fr| values are shown in Tables 1 to 3 along with the workability grades.
It is noted that for a more proper measurement of the back-face peel strength, double-faced PSA tape 130 is used to prevent the surface protection film 1 from being pulled up away from stainless steel plate 132 along with PSA tape 160 when peeling back PSA tape 160 from the back face 1A of surface protection film 1, and a double-faced PSA tape 130 can be suitably selected to serve such a purpose. Herein, a product under trade name "No. 500A" available from Nitto Denko Corporation was used.

### 4-2. Peel strength stability against repeated use of pick-up tape

### (Fabrication of evaluation pick-up tape piece G3)

Double-faced PSA tape G3 (trade name "No. 512B" available from Nitto Denko Corporation) having an acrylic PSA layer on each face of a non-woven fabric substrate was cut to 100 mm long. To an adhesive face (first adhesive face) thereof, a 38 µm thick PET film was adhered to support the tape. The resultant was cut to 10 mm wide to obtain an evaluation pick-up tape piece G3 backed by the PET film.

### (Measurement of initial peel strength)

To the back face (i.e., the top coat layer surface) of the surface protection film according to each example, the other adhesive face (second adhesive face) of the pick-up tape piece G3 was pressure-bonded at a pressure of 0.25 MPa and a rate of 0.3 m/min. This was left at 23 °C and 50 % RH for 20 minutes. Subsequently, using a universal tensile tester, the pick-up tape piece G3 was peeled back from the back face of the surface protection film at a peel rate of 10 m/min and a peel angle of 180°, and the peel strength (initial peel strength) Fx (N/10mm) was measured at the same time.

### (Repeating pressure-bonding and peeling cycles)

Subsequently, the back face of the surface protection film according to each example was subjected to repeated cycles of hand pressure-bonding of the second adhesive face of the pick-up tape piece G3 after the initial peel strength measurement and immediate peeling of the pick-up tape piece G3. During this procedure, the pick-up tape piece G3 was adhered to a different part of the surface protection film for every cycle. The cycles of pressure-bonding and peeling were carried out under assumption of an embodiment where one pick-up tape piece is used repeatedly for removing many surface protection films from adherends.

### (Measurement of peel strength after repeated use)

With respect to the pick-up tape piece G3 after the completion of 200 pressure-bonding and peeling cycles, in the same manner as the initial peel strength measurement, was measured the peel strength relative to the back face of the surface protection film according to each example. In particular, the second adhesive face of the pick-up tape piece G3 after the 200 pressure-bonding and peeling cycles was pressure-bonded to the back face of the surface protection film according to each example at a pressure of 0.25 MPa and a rate of 0.3 m/min. After this was left at 23 °C and 50 % RH for 20 minutes, using a universal tensile tester, the pick-up test piece was peeled back from the back face of the surface protection film at a peel rate of 10 m/min and a peel angle of 180°, and the peel strength (peel strength after the 200 cycles of use) Fy (N/10mm) was measured at the same time. Fx - Fy, the difference between the initial peel strength and the peel strength after 200 pressure-bonding and peeling cycles, was determined.

### 5. Measurement of peel strength of surface protection film

As an adherend, was obtained a 70 mm wide by 100 mm long plain polarizing plate (SEG 1425DU, a TAC polarizing plate available from Nitto Denko Corporation). The surface protection film according to each example was cut to a size of 25 mm wide by 100 mm long, and the adhesive face thereof was pressure-bonded to the polarizing plate at a pressure of 0.25 MPa and a rate of 0.3 m/min. After this was left at 23 °C and 50 % RH for 30 minutes, using a universal tensile tester in the same environment, the surface protection film was peeled back from the polarizing plate at a peel rate of 0.3 m/min and a peel angle of 180°, and the peel strength (low-speed peel strength) Fp (N/25mm) was measured at the same time.
In the same manner except that the peel rate was set at 30 m/min, the peel strength (high-speed peel strength) (N/25mm) was measured.

### <Example 1>

### (Preparation of coating mixture)

Was obtained a dispersion A1 (an aqueous dispersion of a saturated polyester copolymer resin under trade name "VYLONAL MD-1480" available from Toyobo Co., Ltd.; or "binder dispersion A I " hereinafter) containing 25 % of a polyester resin (binder B1) as a binder. Also, was obtained an aqueous dispersion (or "slip agent dispersion C1" hereinafter) of carnauba wax as a slip agent. In addition, was obtained an aqueous solution (trade name "BAYTRON P" available from H. C. Stark GmbH; or "aqueous conductive polymer solution D1" hereinafter) containing 0.5 % of poly(3,4-ethylenedioxythiophene) (PEDT) and 0.8 % of polystyrenesulfonate (PSS) (Mn 15 × 10⁴).
To a mixed solvent formed of water and ethanol, were added 100 parts of the binder dispersion A I based on the solid content, 30 parts of the slip agent dispersion C1 based on the solid content, 50 parts of the aqueous conductive polymer solution D1 based on the solid content, and a melamine-based crosslinking agent. The resulting mixture was stirred sufficiently for about 20 minutes. A coating mixture E1 with approximately 0.15 % NV was thus prepared.

### (Formation of top coat layer)

Was obtained a 38 µm thick by 30 cm wide by 40 cm long transparent polyethylene terephthalate (PET) film having a corona-treated face (first face). To the corona-treated face of the PET film, the coating mixture E1 was applied with a bar coater, and allowed to dry at 130 °C for two minutes. A top-coated substrate T1 comprising a 10 nm thick transparent top coat layer on the first face of a PET film was thus fabricated.

### (Preparation of PSA composition F1)

To a three-neck flask, were placed 100 parts of 2-ethylhexyl acrylate, 4 parts of 2-hydroxyethyl acrylate, and 200 parts of toluene as a polymerization solvent. The resulting mixture was stirred under a nitrogen flow for 2 hours to remove oxygen from the polymerization system. Subsequently, 0.15 part of 2,2'-azobisisobutyronitrile (AIBN) was added. The resulting reaction mixture was heated to 70°C and stirred for 6 hours to effect the polymerization reaction.
To the polymer solution F0 (a toluene solution of an acrylic polymer) thus obtained, relative to 100 parts of its solid content, were added 0.5 part of polypropylene glycol (PPG) (Wako Pure Chemical Industries, Ltd.; Mn 2000) as an alkylene oxide compound having a diol structure, 4.5 parts of an isocyanate crosslinking agent (trade name "CORONATE L" available from Nippon Polyurethane Industry Co., Ltd.), 0.20 part of dibutyltin dilaurate (1% ethyl acetate solution) as a crosslinking catalyst, and toluene in an amount to yield a final NV of 25 %. The resulting mixture was stirred at ambient temperature (25 °C) for about one minute to prepare an acrylic PSA composition F1.

### (Fabrication of surface protection film)

Was obtained a release sheet prepared by treating a face of a PET film with a silicone-release agent. On top of the release face (release agent-treated face) of the release sheet, the PSA composition F1 was applied and allowed to dry to form a 20 µm thick acrylic PSA layer. The PSA layer was adhered to the other face (the second face, i.e., the surface without a top coat layer) of the top-coated substrate T1, and the resultant was cured (aged) for three days at 50 °C and 15 % RH to obtain a surface protection film according to the present example.

### <Example 2>

The amount of the coating mixture E1 applied for fabricating the top-coated substrate T1 in Example 1 was modified to obtain a top-coated substrate T2 comprising a 50 nm thick top coat layer on the first face of a PET film. In the same manner as Example 1 except that top-coated substrate T2 was used in place of top-coated substrate T1, was fabricated a surface protection film according to the present example.

### <Example 3>

To the polymer solution F0 obtained in Example 1, relative to 100 parts of its solid content, were added 2.5 parts of an isocyanate crosslinking agent "CORONATE L", 0.10 part of dibutyltin dilaurate (1% ethyl acetate solution) as a crosslinking catalyst, 0.3 part of an ionic liquid (trade name "CIL-312" available from Japan Carlit Co., Ltd.; 1-butyl-3-methylpyridinium bis(trifluoromethanesulfonyl) imide), and toluene in an amount to yield a final NV of 25 %. The resulting mixture was stirred at ambient temperature (25 °C) for about one minute to prepare an acrylic PSA composition F2. In the same manner as Example 1 except that PSA composition F2 was used in place of PSA composition F1 and that the thickness of the PSA layer was modified to 15 µm, was fabricated a surface protection film according to the present example.

### <Example 4>

In the same manner as Example 3 except that top-coated substrate T2 was used in place of top-coated substrate T1, was fabricated a surface protection film according to the present example.

### <Example 5>

To the polymer solution F0 obtained in Example 1, relative to 100 parts of its solid content, were added 4.0 parts of an isocyanate crosslinking agent (trade name "CORONATE HX" available from Nippon Polyurethane Industry Co., Ltd.), 0.20 part of dibutyltin dilaurate (1% ethyl acetate solution) as a crosslinking catalyst, and toluene in an amount to yield a final NV of 25 %. The resulting mixture was stirred at ambient temperature (25 °C) for about one minute to prepare an acrylic PSA composition F3. That is, no alkylene oxide compound was used in the preparation of the PSA composition F3.
The amount of the coating mixture E1 applied for fabricating the top-coated substrate T1 in Example 1 was modified to obtain a top-coated substrate T3 comprising a 14 nm thick top coat layer on the first face of a PET film.
In the same manner as Example I except that top-coated substrate T3 was used in place of top-coated substrate T1 and that PSA composition F3 was used in place of PSA composition F1, was fabricated a surface protection film according to the present example.

### <Example 6>

### (Preparation of PSA composition Fem11)

To a container, were placed 76 parts of water, 92 parts of2-ethylhexyl acrylate, 4 parts of methyl methacrylate, 4 parts of acrylic acid, and 3 parts of polyoxyethylene alkyl propenyl phenyl ether sulfate ammonium salt (a reactive emulsifier under trade name "AQUALON HS-1025" available from Dai-ichi Kogyo Seiyaku Co., Ltd.). The resulting mixture was stirred by a homomixer to prepare a monomer emulsion.

To a reaction vessel equipped with a condenser, nitrogen inlet, thermometer and stirrer, were added 40.5 parts of water, 0.01 part of ammonium persulfate as a polymerization initiator, and a 10 % portion of the monomer emulsion prepared above. The resulting mixture was stirred at 75 °C for one hour to effect the emulsion polymerization. Subsequently, 0.07 part of the same polymerization initiator (ammonium persulfate) was further added to the reaction vessel, and the remaining monomer emulsion (corresponding to a 90 % portion of the entire monomer emulsion) was gradually added with stirring over 3 hours, and the resulting reaction mixture was stirred at 75 °C for 3 hours. This was cooled to 30 °C, and 10 % aqueous ammonia was added to adjust the pH to 8.
To the acrylic polymer solution Fem10 (an aqueous dispersion of an acrylic polymer; 41 % NV), relative to 100 parts of its solid content (244 parts by wet mass of Fem 10), were added 0.3 part of an alkylene oxide compound (trade name "ADEKA PLURONIC 25R-1" available from Adeka Corporation; Mn 2800), 2.5 parts of an epoxy-based crosslinking agent (trade name "TETRAD-C" available from Mitsubishi Gas Chemical Inc.; 1,3-bis(N,N-diglycidylaminomethyl)cyclohexane; epoxy equivalence: 110; number of functional groups: 4), and 1.0 part of an acetylene diol compound (trade name "SURFYNOL 420" available from Nissin Chemical, Co., Ltd.). At 23 °C, using a stirrer, the resulting mixture was stirred at 300 rpm for 10 minutes to prepare a water-dispersed acrylic PSA composition Fem 11.

### (Fabrication of surface protection film)

The amount of the coating mixture E1 applied for fabricating the top-coated substrate T1 in Example 1 was modified to obtain a top-coated substrate T3 comprising a 14 nm thick top coat layer on the first face of PET film. Using an applicator available from Tester Sangyo Co., Ltd., the PSA composition Fem11 prepared above was applied to the second face (opposite to the top coat layer) of the top-coated substrate T3 so as to form a PSA layer having a thickness of 20 µm after dried. The applied PSA composition was allowed to dry for 2 minutes in a circulating hot air oven at 120 °C, and then cured (aged) in an environment at 50 °C and 15 % RH for 3 days to obtain a surface protection film according to the present example.

### <Example 7>

The amount of the non-aqueous crosslinking agent "TETRAD-C" used relative to 100 parts of the solid content of acrylic polymer emulsion Fem10 in the preparation of PSA composition Fem11 in Example 6 was modified to 3.0 parts to obtain a water-dispersed acrylic PSA composition Fem12. In the same manner as Example 6 except that PSA composition Fem12 was used in place of PSA composition Fem 11, was fabricated a surface protection film according to the present example.

### <Example 8>

3 parts of sodium alkyl sulfosuccinate (trade name "ELEMINOL JS-20" available from Sanyo Chemical Industries, Ltd.) was used as the emulsifier in place of "AQUALON HS-1025" in preparation of acrylic polymer emulsion Fem10 in Example 6. Otherwise in the same manner as the preparation of Fem10, was obtained an acrylic polymer emulsion Fem20. In the same manner as Example 6 except that Fem20 was used in place of acrylic polymer emulsion Fem10, was prepared a water-dispersed acrylic PSA composition Fem21. In the same manner as Example 6 except that water-dispersed acrylic PSA composition Fem21 was used in place of water-dispersed acrylic PSA composition Fem11, was fabricated a surface protection film according to the present example.

### <Example 9>

In the same manner as Example 7 except that Fem20 was used in place of acrylic polymer emulsion Fem 10, was prepared a water-dispersed acrylic PSA composition Fem22. In the same manner as Example 7 except that water-dispersed acrylic PSA composition Fem22 was used in place of water-dispersed acrylic PSA composition Fem 12, was fabricated a surface protection film according to the present example.

### <Example 10>

### (Preparation of coating mixture)

To a reaction vessel, 25 g of toluene was placed and the temperature inside the reaction vessel was raised to 105 °C. To the reaction vessel, was added dropwise continuously over two hours a mixture of 30 g of methyl methacrylate, 10 g of n-butyl acrylate, 5 g of cyclohexyl methacrylate, and 0.2 g of AIBN. After the addition was completed, the temperature inside the reaction vessel was adjusted to 110 °C to 115 °C, and the reaction mixture was stirred at the same temperature for three hours to effect the copolymerization reaction. When the three hours had elapsed, to the reaction vessel, a mixture of 4 g of toluene and 0.1 g of AIBN was added dropwise, and the resulting mixture was stirred at the same temperature for one hour. Subsequently, the temperature inside the reaction vessel was cooled to 90 °C and the mixture was diluted with toluene to adjust the NV content to 5 %. A solution (binder solution A2) containing 5 % of the acrylic polymer (binder B2) as the binder in toluene was thus obtained.
In addition, were obtained a silicone-based leveling agent (trade name "BY 16-201" available from Dow Coming Toray Co., Ltd., dimethyl siloxane hydroxyalkyl-terminated; or "slip agent C2" hereinafter) and an aqueous conductive polymer solution (or "aqueous conductive polymer solution D2" hereinafter) containing PEDT and PSS with 4.0 % NV.
To a mixture of 50 parts of the binder solution A2 based on the solid content, 25 parts of the slip agent C2 based on the solid content, 25 parts of the aqueous conductive polymer solution D2 based on the solid content, and a melamine-based crosslinking agent, ethylene glycol monoethyl ether was added to a final NV of about 0.15 % to prepare a coating mixture E2.

### (Formation of top coat layer)

To a corona-treated surface (first face) of the same PET film as the one used in Example 1, the coating mixture E2 was applied with a bar coater and allowed to dry at 130 °C for 2 minutes to obtain a top-coated substrate comprising a 10 nm thick transparent top coat layer on the first face of the PET film.

### (Preparation of PSA composition F4)

To the polymer solution F0 obtained in Example 1, relative to 100 parts of its solid content, were added 4.0 parts of an isocyanate crosslinking agent "CORONATE L", 0.20 part of dibutyltin dilaurate (1 % ethyl acetate solution) as a crosslinking catalyst, and toluene in an amount to yield a final NV of 20 %. The resulting mixture was stirred at ambient temperature (25 °C) for about one minute to prepare an acrylic PSA composition F4.

### (Fabrication of surface protection film)

Was obtained a release sheet prepared by treating a face of a PET film with a silicone-release agent. On top of the release face (release agent-treated face) of the release sheet, the PSA composition F4 was applied and allowed to dry to form a 20 µm thick acrylic PSA layer. The PSA layer was adhered to the other face (surface without a top coat layer) of the top-coated substrate to fabricate a surface protection film according to the present example.

### <Example 11>

Was obtained a solution containing a cationic polymer-based antistatic agent (trade name "BONDIP P main agent" available from Konishi Co., Ltd.) and an epoxy resin (trade name "BONDIP P curing agent" available from Konishi Co., Ltd.) as a curing agent at a mass ratio of 100:46.7 based on the NV. This solution was applied to the corona-treated surface (first face) of the same PET film as the one used in Example 1 and allowed to dry to form a top coat layer with 0.06 g/m² based on the NV. Subsequently, to the surface of the top coat layer, a long-chain alkyl carbamate-based release treatment agent (trade name "PEELOIL 1010" available from Ipposha Oil Industries Co., Ltd.) was applied at 0.02 g/m² based on the NV and allowed to dry to provide slipperiness to the top coat layer. In the same manner as Example 10 except that the substrate thus obtained was used, was fabricated a surface protection film according to the present example.

### <Example 12>

To the polymer solution F0 obtained in Example 1, relative to 100 parts of its solid content, were added 0.3 part of an alkylene oxide compound (trade name "ADEKA PLURONIC 25R-1" available from Adeka Corporation), 2 parts of an isocyanate crosslinking agent (trade name "CORONATE HX" available from Nippon Polyurethane Industry Co., Ltd.), 0.20 part of dibutyltin dilaurate (1% ethyl acetate solution) as a crosslinking catalyst, and toluene in an amount to yield a final NV of 25 %. The resulting mixture was stirred at ambient temperature (25 °C) for about one minute to prepare an acrylic PSA composition F5. In the same manner as Example 1 except that PSA composition F5 was used in place of PSA composition F1, was fabricated a surface protection film according to the present example.

### <Example 13>

To the polymer solution F0 obtained in Example 1, relative to 100 parts of its solid content, were added 0.3 part of an alkylene oxide compound (trade name "ADEKA PLURONIC 25R-1" " available from Adeka Corporation), 0.07 part of lithium bis(trifluoromethanesulfonyl)imide (available from Kishida Chemical Co., Ltd.), 2 parts of an isocyanate crosslinking agent (trade name "CORONATE HX" available from Nippon Polyurethane Industry Co., Ltd.), 0.20 part of dibutyltin dilaurate (1 % ethyl acetate solution) as a crosslinking catalyst, and toluene in an amount to yield a final NV of 25 %. The resulting mixture was stirred at ambient temperature (25 °C) for about one minute to prepare an acrylic PSA composition F6. In the same manner as Example 1 except that PSA composition F6 was used in place of PSA composition F1, was fabricated a surface protection film according to the present example.

### <Example 14>

To the acrylic polymer emulsion Fem10 (an aqueous dispersion of an acrylic polymer; 41 % NV) obtained in Example 6, relative to 100 parts of its solid content (244 parts by wet mass of Fem10), were added 1.0 part of an alkylene oxide compound (trade name "ADEKA PLURONIC 25R-1" " available from Adeka Corporation) and 2.5 parts of an epoxy-based crosslinking agent (trade name "TETRAD-C" available from Mitsubishi Gas Chemical Inc.). At 23 °C, using a stirrer, the resulting mixture was stirred at 300 rpm for 10 minutes to prepare a water-dispersed acrylic PSA composition Fem 13. In the same manner as Example 6 except that PSA composition Fem 13 was used in place of PSA composition Fem11, was obtained a surface protection film according to the present example.

Tables 1 to 3 show summarized constitutions of surface protection films according to the respective examples along with the results of measurements and evaluations performed thereon by the methods described above.

[Table 1]

**Table 1**

| | | | Ex. 1 | Ex. 2 | Ex. 3 | Ex. 4 | Ex. 5 |
|---|---|---|---|---|---|---|---|
| Top coat layer | Binder | | Polyester | Polyester | Polyester | Polyester | Polyester |
| | Slip agent | | Wax ester | Wax ester | Wax ester | Wax ester | Wax ester |
| | Thickness (nm) | | 10 | 50 | 10 | 50 | 14 |
| PSA layer | PSA | | F1 | F1 | F2 | F2 | F3 |
| | Ionic liquid | | none | none | present | present | none |
| | Thickness (µm) | | 20 | 20 | 15 | 15 | 21 |
| Clouding resistance | Initial | | 0 | 0 | 0 | 0 | 0 |
| | After heated/moistened | | 2 | 1 | 2 | 1 | 1 |
| Solvent resistance | | | good | good | good | good | good |
| Back-face peel strength | PSA dependence (N/20mm) (converted value) | TapeG1 (Fa) | 6.7 | 6.3 | 6.7 | 6.3 | 6.4 |
| | | Tape G2 (Fr) | 5.8 | 5.3 | 5.8 | 5.3 | 5.5 |
| | | \|Fa - Fr\| | 0.9 | 1.0 | 0.9 | 1.0 | 0.9 |
| | | Workability | good | good | good | good | good |
| | Peel strength stability (N/10mm) | Tape G3 Initial (Fx) | 5.4 | 5.4 | 5.4 | 5.4 | 5.4 |
| | | Tape G3 After use (Fy) | 2.8 | 2.8 | 2.8 | 2.8 | 2.8 |
| | | Fx-Fy | 2.6 | 2.6 | 2.6 | 2.6 | 2.6 |
| Peel strength to polarizing plate (N/25mm) | 0.3 m/min (Fp) | | 0.08 | 0.08 | 0.05 | 0.05 | 0.07 |
| | 30 m/min | | 1.1 | 1.1 | 0.9 | 0.9 | 1.3 |

| | | | | | | | |
|---|---|---|---|---|---|---|---|
| Tape G1: a product ofNitto Denko Corp., trade name "No. 31B" (acrylic PSA) Tape G2: a product of Nichiban Co., Ltd., trade name "CELLOTAPE ®" (natural rubber-based PSA) Tape G3: a product ofNitto Denko Corp., trade name "No. 512B" (acrylic PSA) | | | | | | | |

[Table 2]

**Table 2**

| | | | Ex. 6 | Ex. 7 | Ex. 8 | Ex 9 | Ex. 10 | Ex. 11 |
|---|---|---|---|---|---|---|---|---|
| Top coat layer | Binder | | Polyester | Polyester | Polyester | Polyester | Acrylic | Epoxy resin |
| | Slip agent | | Wax ester | Wax ester | Wax ester | Wax ester | Silicone | - |
| | Thickness (nm) | | 14 | 14 | 14 | 14 | 10 | 80 |
| PSA layer | PSA | | Fem11 | Fem12 | Fem21 | Fem22 | F4 | F4 |
| | Ionic liquid | | none | none | none | none | none | none |
| | Thickness (µm) | | 20 | 20 | 20 | 20 | 20 | 20 |
| Clouding resistance | Initial | | 0 | 0 | 0 | 0 | 0 | 0 |
| | After heated/moistened | | 1 | 1 | I | 1 | 3 | 4 |
| Solvent resistance | | | good | good | good | good | poor | poor |
| Back-face peel strength | PSA dependence (N/20mm) (converted value) | Tape G1 (Fa) | 6.5 | 6.4 | 6.5 | 6.6 | 8.8 | 3.5 |
| | | Tape G2 (Fr) | 5.6 | 5.4 | 5.5 | 5.4 | 7.2 | 0.8 |
| | | \|Fa-Fr\| | 0.9 | 1.0 | 1.0 | 1.2 | 1.6 | 2.7 |
| | | Workability | good | good | good | good | poor | poor |
| | Peel strength stability (N/10mm) | Tape G3 Initial (Fx) | 5.4 | 5.4 | 5.4 | 5.4 | 7.2 | - |
| | | Tape G3 After use (Fy) | 2.8 | 2.8 | 2.8 | 2.8 | 3.2 | - |
| | | Fx-Fy | 2.6 | 2.6 | 2.6 | 2.6 | 4.0 | - |
| Peel strength to polarizing plate (N/25mm) | 0.3m/min(Fp) | | 0.10 | 0.09 | 0.11 | 0.09 | 0.17 | 0.17 |
| | 30m/min | | 0.7 | 0.65 | 0.75 | 0.7 | 2.5 | 2.5 |

| | | | | | | | | |
|---|---|---|---|---|---|---|---|---|
| Tape G1: a product of Nitto Denko Corp., trade name "No. 31B" (acrylic PSA) Tape G2: a product of Nichiban Co., Ltd., trade name "CELLOTAPE ®" (natural rubber-based PSA) Tape G3: a product of Nitto Denko Corp., trade name "No. 512B" (acrylic PSA) | | | | | | | | |

[Table 3]

**Table 3**

| | | | Ex. 12 | Ex. 13 | Ex. 14 |
|---|---|---|---|---|---|
| Top coat layer | Binder | | Polyester | Polyester | Polyester |
| | Slip agent | | Wax ester | Wax ester | Wax ester |
| | Thickness (nm) | | 10 | 10 | 14 |
| PSA layer | PSA | | F5 | F6 | Fem13 |
| | Ionic liquid | | none | none | none |
| | Thickness (µm) | | 20 | 20 | 20 |
| Clouding resistance | Initial | | 0 | 0 | 0 |
| | After heated/moistened | | 2 | 2 | 1 |
| Solvent resistance | | | good | good | good |
| Sack-face peel strength | PSA dependence (N/20mm) (converted value) | Tape G1 (Fa) | 6.7 | 6.7 | 6.5 |
| | | Tape G2 (Fr) | 5.8 | 5.8 | 5.6 |
| | | \|Fa - Fr\| | 0.9 | 0.9 | 0.9 |
| | | Workability | good | good | good |
| | Peel strength stability (N/10mm) | Tape G3 Initial (Fx) | 5.4 | 5.4 | 5.4 |
| | | Tape G3 After use (Fy) | 2.8 | 2.8 | 2.8 |
| | | Fx - Fy | 2.6 | 2.6 | 2.6 |
| Peel strength to polarizing plate (N/25mm) | 0.3 m/min (Fp) | | 0.04 | 0.05 | 0.06 |
| | 30 m/min | | 0.9 | 1.2 | 0.5 |

| | | | | | |
|---|---|---|---|---|---|
| Tape G1: a product of Nitto Denko Corp., trade name "No. 31B" (acrylic PSA) Tape G2: a product of Nichiban Co., Ltd., trade name "CELLOTAPE ®" (natural rubber-based PSA) Tape G3: a product of Nitto Denko Corp., trade name "No. 512B" (acrylic PSA) | | | | | |

As shown in Tables 1 to 3, with respect to the top coat layers of Examples 1 to 9 and 12 to 14 each comprising a wax ester as the slip agent and a polyester resin as the binder, all exhibited great initial clouding resistance, and even after stored under a hot-humid condition as harsh as 60 °C and 95 % RH for two weeks, clouding was observed only to a minute degree. The top coat layers according to Examples 1 to 9 and 12 to 14 all exhibited good solvent resistance as well. Furthermore, the surface protection films according to Examples 1 to 9 and 12 to 14 all provided good workability, allowing the back-face peel strength to be less dependent on the pick-up tape PSA (more specifically, with |Fa-Fr| < 1.5, e.g., |Fa-Fr|≤ 1.0 with respect to Examples 1 to 8 and 12 to 14). Each of these resulted in a (Fa,Fr)ₘᵢₙ/Fp value of 5 or larger (specifically, 50 or larger), exhibiting a great balance between the adhesive strength (peel strength) to an adherend and the back-face peel strength relative to itself. The surface protection films according to Examples 1 to 9 and 12 to 14 allowed repeated pressuring bonding and peeling of the pick-up tape pieces to and from their back faces, without significantly reducing the peel strength of the pick-up tape pieces. These results indicate that these surface protection films are compatible with repeated use of a pick-up tape.

On the other hand, as compared to Examples 1 to 9 and 12 to 14, the top coat layer of Example 10 containing a silicone-based slip agent exhibited, despite the comparable initial clouding resistance, clearly inferior clouding resistance after heated and moistened. It is considered that due to the heat and moisture added, the silicone-based slip agent bled excessively to the top coat layer surface, causing part of itselfto turn into oily droplets, and the oily droplets (cloudy part) of the silicone-based slip agent were removed off during the clouding resistance test, thereby its clouding resistance decrease was visually observed. With respect to Example 11 in which the surface of the slip-agent-free antistatic layer comprising an epoxy resin as the binder was treated with a long-chain alkyl carbamate-based release treatment agent, the release agent turned cloudy due to the heat and moisture added. With respect to each of the top coat layers of Examples 10 and 11, |Fa - Fr| was 1.5 or larger, exhibiting a back-face peel strength highly dependent on the pick-up tape PSA. These top coat layers showed poor solvent resistance as well. The surface protection film of Example 11 resulted in a Fr value as low as 0.8 N/20mm, making it difficult to be picked up by a rubber-based PSA. In addition, with respect to the surface protection film of Example 10, when pick-up tape piece (G3) was pressure-bonded to and peeled back from the back face thereof repeatedly, a clearly large decrease in the peel strength of the pick-up tape piece was observed in comparison to Examples 1 to 9 and 12 to 14.

### INDUSTRIAL APPLICABILITY

The surface protection film disclosed herein is suitably used for protecting optical parts for use as components of liquid crystal display panels, plasma display panels (PDP), organic electroluminescence (EL) displays, etc., during their manufacturing, transport, etc. Especially, it is useful as a surface protection film applied to optical parts such as polarizing plates (polarizing films), wave plates, retardation plates, optical compensation films, brightening films, light-diffusing sheets, reflective sheets, and the like to be used in liquid crystal display panels.

## Claims

1. A surface protection film comprising:
a substrate having a first face and a second face;
a top coat layer provided on the first face of the substrate; and
a pressure-sensitive adhesive layer provided on the second face of the substrate,
wherein the top coat layer comprises a wax as a slip agent and a polyester resin as a binder, with the wax being an ester of a higher fatty acid and a higher alcohol.

2. The surface protection film according to Claim 1, wherein the substrate is a polyester resin film.

3. The surface protection film according to Claim 1 or 2, wherein the top coat layer comprises an antistatic ingredient.

4. The surface protection film according to any one of Claims 1 to 3, wherein the pressure-sensitive adhesive layer is constituted with an acrylic pressure-sensitive adhesive.

5. The surface protection film according to any one of Claims 1 to 4, wherein the pressure-sensitive adhesive layer comprises an antistatic ingredient.

6. An optical component on which the surface protection film according to any one of Claims I to 5 is adhered.
